# EUROPÄISCHE PATENTANMELDUNG

(11) **EP 3 575 906 A1**
(43) Veröffentlichungstag der Anmeldung: **04.12.2019**
(21) Anmeldenummer: 18174890.6
(22) Anmeldetag: 29.05.2018
(51) Int. Cl.: G05B 19/4099

(54) **SYSTEM, VORRICHTUNG, FERTIGUNGSMASCHINE, VERMESSUNGSGERÄT UND VERFAHREN ZUM FERTIGEN EINES PRODUKTES**

(71) Anmelder: Siemens Aktiengesellschaft, 80333 München (DE)
(72) Erfinder: Krause, Stefan, 04177 Leipzig (DE); Lipp, Christian, 94065 Waldkirchen (DE); Nowitschkow, Alexander, 81739 München (DE); Robl, Peter, 94133 Röhrnbach (DE)

(57) **Zusammenfassung**

Die Erfindung betrifft ein System, Vorrichtung, Fertigungsmaschine, Vermessungsgerät und Verfahren zum Fertigen eines Produktes. Mit der Erfindung kann eine Fertigungsanlage mittels eines dreidimensionalen Datenmodells, das zudem Fertigungsanweisungen umfasst, stärker automatisiert werden, als dies bisher mit konventionellen Automatisierungsnetzwerken möglich ist.

## Beschreibung

Die Erfindung bezieht sich auf ein System, Vorrichtung, Fertigungsmaschine, Vermessungsgerät und Verfahren zum Fertigen eines Produktes.

Im Allgemeinen ist es Stand der Technik bzw. im industriellen Umfeld üblich, als Produktdefinitionsdokument bei der Fertigung eine analoge 2D-Zeichnung zu verwenden.

Eine Aufgabe der vorliegenden Erfindung ist es einen Fertigungsprozess hinsichtlich der Fertigung eines Produktes zu verbessern.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Ein erster Aspekt der Erfindung betrifft ein Fertigungssystem umfassend:
- eine Fertigungsmaschine aufweisend
   - ein erstes Kommunikationsmodul zum Empfangen eines dreidimensionalen Modells und/oder von Steuerbefehlen, wobei
      - das dreidimensionale Modell Fertigungsanweisungen für die Fertigungsmaschine umfasst;
      - den jeweiligen Fertigungsanweisungen Fertigungsreferenzwerte und/oder Fertigungstoleranzwerte und/oder Eingreiftoleranzwerte zugeordnet sind;
   - ein Fertigungsmodul, wobei mittels des dreidimensionalen Modells, der Fertigungsanweisungen und der Steuerbefehle die Fertigungsmaschine derart konfiguriert wird, dass ein zu dem dreidimensionalen Modell korrespondierendes Objekt gefertigt wird;
   - ein Berechnungsmodul, wobei das Berechnungsmodul mittels des dreidimensionalen Modells und der Fertigungsanweisungen die Steuerbefehle berechnet;
   - Vermessungsgerät aufweisend
      - ein zweites Kommunikationsmodul zum Empfangen des dreidimensionalen Modells;
      - ein Erfassungsmodul, wobei
         - das Erfassungsmodul mittels Sensoren Messwerte für das gefertigte Objekt erfasst,
         - die Messwerte jeweils für die Fertigungsreferenzwerte und/oder die Fertigungstoleranzwerte erfasst werden;
      - ein Überprüfungsmodul, wobei
         - insbesondere mittels der Messwerte überprüft wird, ob das gefertigte Objekt die Referenzwerte und/oder die Toleranzwerte einhält,
         - insbesondere die Messwerte mit den Referenzwerte und/oder die Toleranzwerte abgeglichen werden,
         - insbesondere bei einer Abweichung der Messwerte von den entsprechenden Fertigungsreferenzwerten und bei einer Überschreitung der zugehörigen Fertigungstoleranzwerte und/oder der zugehörigen Eingreiftoleranzwerte ein Steuersignal bereitgestellt wird.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrocontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder z. B. ein Multi-Chip-Modul, z. B. ein 2,5D oder 3D Multi-Chip-Modul, bei dem insbesondere mehrere sogenannte Dies direkt oder über einen Interposer miteinander verbunden sind oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden.

Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger oder z. B. ein wechselbares Speichermodul verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter einem "gefertigten Objekt", "zu fertigenden Objekt" und dergleichen kann im Zusammenhang mit der Erfindung beispielsweise ein Produkt oder ein Objekt oder ein Werkstück verstanden werden, für dessen Bearbeitung mindestens ein Werkzeug (z. B. eine Fräse oder ein Bohrer) benötigt wird und/oder für dessen Fertigung eine oder mehrere Oberflächen- oder Materialbearbeitungen durch ein Werkzeug erfolgen. Zusätzlich oder alternativ kann für die Bearbeitung eine oder mehrere Fertigungsmaschinen notwendig sein, die insbesondere anhand des dreidimensionalen Modells und/oder der Fertigungsanweisungen ausgewählt sind/werden, damit das zu fertigende Objekt durch die Maschinen hergestellt wird.

Unter einem "dreidimensionalen Modell" und dergleichen kann im Zusammenhang mit der Erfindung beispielsweise ein maßstabsgetreues (digitales) dreidimensionales Modell (z. B. in Form eines CAD-Modells) des zu fertigenden Objektes verstanden werden. Das dreidimensionale Modell ist insbesondere eine digitale oder virtuelle Abbildung des zu fertigenden Objektes, das zusätzlich die notwendigen Informationen (Fertigungsanweisungen und/oder Toleranzangaben) umfasst, dass beispielsweise eine oder mehrere Fertigungsmaschinen bestimmt bzw. ausgewählt werden können, denen dann die entsprechenden Daten des dreidimensionalen Modells gesendet (bzw. übermittelt) werden können, sodass das die entsprechenden Fertigungsmaschinen das zu fertigende Objekt herstellen können. Das dreidimensionale Modell umfasst dabei insbesondere zusätzlich die Fertigungsanweisungen und/oder Toleranzangaben, welche insbesondere Oberflächen des dreidimensionalen Modells zugeordnet sind. Mittels dieser Oberflächen können beispielsweise zu fertigende Strukturen (z. B. Bohrungen, Ausfräsungen, Ausbuchtungen) und deren Größe und Position am zu fertigenden Objekt definiert werden. Mit anderen Worten sind insbesondere durch das dreidimensionale Modell und der Fertigungsanweisungen zu fertigende Strukturen (z. B. zu fertigende geometrische Strukturen) bei der Fertigung des zu fertigenden Objektes vorgegeben bzw. festgelegt (z. B. mittels der Fertigungsreferenzwerte). Dabei können insbesondere die Fertigungsanweisungen Voraussetzungen für eine Durchführung der Fertigungsanweisungen durch eine Fertigungsmaschine umfassen. Diese Voraussetzungen können eine Reihenfolge von Bearbeitungsschritten des zu fertigenden Objektes vorgeben oder definieren auch Materialüberstände (bzw. Aufmaße), die z. B. für den nächsten Verarbeitungsschritt notwendig sind. Eine erfindungsgemäße Fertigungsmaschine wertet bzw. berücksichtigt beispielsweise diese Voraussetzungen und lässt bei der Abarbeitung einer ersten Fertigungsanweisung genügend Material übrig, dass z. B. eine oder mehrere nachfolgende Fertigungsanweisungen für die Fertigung des Objektes noch durchgeführt werden können. Insbesondere können die Fertigungsanweisungen vorzugsweise vorgegebenen Positionen des dreidimensionalen Modells zugeordnet werden. Die Fertigungsanweisungen umfassen beispielsweise Anweisungen und/oder Angaben und/oder Vorgaben, damit zu fertigende Strukturen (z. B. geometrische Strukturen wie Ausbuchtungen, Oberflächenbearbeitungen wie Schleifen oder Beschichten) an den vorgegebenen Positionen am zu fertigenden Objekt gefertigt werden können. Insbesondere entsprechen die jeweiligen Positionen der zu fertigende Strukturen am dreidimensionalen Modell den Positionen der Strukturen, die am zu fertigenden Objekt erstellt werden. Mit anderen Worten sind damit die zu fertigenden Strukturen räumlich bzw. geometrisch durch die vorgegebenen Positionen bereits am dreidimensionalen Modell mittels der Fertigungsanweisungen festgelegt, wobei die vorgegebenen Positionen am dreidimensionalen Modell den realen Positionen der zu fertigenden Strukturen am zu fertigenden Objekt entsprechen. Mit anderen Worten ist das dreidimensionale Modell beispielsweise ein Datensatz oder eine Datenstruktur, die z. B. geometrische Daten und Fertigungsdaten bzw. Fertigungsanweisungen zum fertigen eines Objektes (z. B. des zu fertigenden Objektes) umfasst. Das dreidimensionale Modell ist somit insbesondere eine dreidimensionale/virtuelle Abbildung des zu fertigenden Objektes, mit dem der Fertigungsprozess zu Herstellung des zu fertigenden Objektes gesteuert wird. Unter Toleranzangaben oder Toleranzwerte werden beispielsweise die Fertigungstoleranzwerte und/oder die Eingreiftoleranzwerte verstanden. Unter Referenzangaben oder Referenzwerte werden beispielsweise die Fertigungsreferenzwerte verstanden.

Unter "Fertigungsreferenzwerten" und dergleichen können im Zusammenhang mit der Erfindung beispielsweise exakte Maße des zu fertigenden Objektes und/oder messbare Eigenschaften des zu fertigenden Objektes und/oder messbare (z. B. von zu fertigenden Strukturen des zu fertigenden Objektes) Größen bei der Abarbeitung von Fertigungsanweisungen verstanden werden. Bei den Fertigungsreferenzwerten kann es sich beispielsweise um theoretisch exakte Maße wie z. B. Gewindeangaben handeln oder diese Werte sind von den Fertigungsreferenzwerten umfasst. Die Fertigungsreferenzwerte sind vorzugsweise direkt den zu fertigenden Oberflächen und/oder zu fertigenden Strukturen des dreidimensionalen Modells zugeordnet. Mittels der Fertigungsreferenzwerte und/oder des dreidimensionalen Modells und/oder der Fertigungsanweisungen werden vorzugsweise die zu fertigenden Strukturen an einem Werkstück vorgegeben (z. B. zu fräsende Ausbuchtungen oder Löcher), damit insbesondere das zu fertigende Objekt erstellt werden kann. Mittels der Fertigungsanweisungen können beispielsweise auch Oberflächenbearbeitungen (z. B. ein Polieren einer Oberfläche oder ein Lackieren einer Oberfläche) oder Arbeitsschritte (z. B. ein Ölen oder Fetten eines gefrästen Gewindes) vorgegeben werden, die insbesondere nicht als zu fertigende Struktur oder geometrische Struktur abbildbar sind. Die Fertigungsreferenzwerte können beispielsweise ebenfalls als eine dreidimensionale (virtuelle/digitale) Abbildung (oder dreidimensionale Geometrie), z. B. mit entsprechenden dreidimensionalen Koordinaten (z. B. X, Y, Z), realisiert sein.

Unter "Fertigungstoleranzwerten" und dergleichen können im Zusammenhang mit der Erfindung beispielsweise Abweichungen von Fertigungsreferenzwerten verstanden werden bis zu denen das zu fertigende Produkt akzeptiert wird. Bei den Fertigungstoleranzwerten kann es sich beispielsweise um Maßtoleranzen, Form- und Lagetoleranzen oder Oberflächenangaben handeln bzw. diese entsprechenden Werte sind von des Fertigungstoleranzwerten umfasst. Wird beispielsweise ein Fertigungstoleranzwert überschritten, kann insbesondere das entsprechende gefertigte Produkt verworfen werden und als Ausschuss deklariert werden. Entsprechend gibt ein Fertigungstoleranzwert beispielsweise einen Schwellwert abhängig von einem entsprechenden Fertigungsreferenzwert an, bei dessen Überschreitung das zu fertigende Produkt verworfen wird. Vorzugsweise ist jedem Fertigungsreferenzwert jeweils zumindest ein Fertigungstoleranzwert zugeordnet (also zugehörig zu diesem gespeichert, indem diese Werte z. B. über gespeicherte Adressen einander zugeordnet sind). Die Fertigungstoleranzwerte können beispielsweise ebenfalls als eine dreidimensionale (virtuelle/digitale) Abbildung (oder dreidimensionale Geometrie), z. B. mit entsprechenden dreidimensionalen Koordinaten (z. B. X, Y, Z), realisiert sein.

Unter "Eingreiftoleranzwerten" und dergleichen können im Zusammenhang mit der Erfindung beispielsweise Abweichungen von Fertigungsreferenzwerten verstanden werden, bei deren Überschreitung zwar das zu fertigende Produkt noch akzeptiert wird (also nicht verworfen wird), jedoch kann dennoch beispielsweise das Werkzeug und/oder die Fertigungsmaschine und/oder das Vermessungsgerät automatisch überprüft und/oder ausgetauscht werden. Hierdurch wird insbesondere vermieden, dass z. B. bei dem nachfolgend zu fertigenden Objekt die Fertigungstoleranzwerte überschritten werden. Bei den Eingreiftoleranzwerten kann es sich beispielsweise um Maßtoleranzen und/oder Form- und Lagetoleranzen und/oder Oberflächenangaben handeln, die beispielsweise als relativer/prozentualer Wert der Fertigungstoleranzwerte (kleiner 100%)) angegeben/berechnet sind. Hierdurch wird insbesondere ein vorsorgliches Eingreifen in den Fertigungsprozess gesteuert, damit keine fehlerhaften Objekte gefertigt werden. Entsprechend sind insbesondere für die Eingreiftoleranzwerte geringere Abweichungen von den Fertigungsreferenzwerten erlaubt als bei den Fertigungstoleranzwerten. Entsprechend sind zumindest einem Teil der Fertigungsreferenzwerte vorzugsweise jeweils (also einem entsprechenden Fertigungsreferenzwert des Teils der Fertigungsreferenzwerte) mindestens ein Eingreiftoleranzwert und/oder ein Fertigungstoleranzwert zugeordnet. Die Eingreiftoleranzwerte können beispielsweise ebenfalls als eine dreidimensionale (virtuelle/digitale) Abbildung (oder dreidimensionale Geometrie), z. B. mit entsprechenden dreidimensionalen Koordinaten (z. B. X, Y, Z), realisiert sein.

Unter "Steuerbefehle" und dergleichen kann im Zusammenhang mit der Erfindung beispielsweise ein Programm- oder ein CNC-Befehl verstanden werden, mit dem ein Werkzeug angesteuert wird (z. B. mit welcher Drehgeschwindigkeit eine Fräse ein Werkstück bearbeitet) und/oder mit welchem Werkzeug oder Werkzeugmaschine (z. B. Fräse, Bohrer oder 3D-Drucker) das zu fertigende Objekt gefertigt werden soll.

Unter "Fertigungsanweisungen" können im Zusammenhang der Erfindung insbesondere Vorgaben zu Arbeitsschritten und/oder Fertigungsschritte verstanden werden, die sich geometrisch durch das dreidimensionale Modell nicht ausdrücken lassen. Mittels der Fertigungsanweisungen können beispielsweise Oberflächenbearbeitungen (z. B. ein Polieren einer Oberfläche oder ein Lackieren einer Oberfläche) oder Arbeitsschritte (z. B. ein Ölen oder Fetten eines gefrästen Gewindes) vorgegeben werden, die insbesondere nicht als zu fertigende Struktur oder geometrische Struktur abbildbar sind.

Die Erfindung ist insbesondere dahingehend vorteilhaft, um z. B. ein Fertigungssystem zu automatisieren, da auf analoge Produktdefinitionen verzichtet werden kann. Der Fertigungsablauf bzw. Fertigungsprozess wird dabei vorzugsweise vollständig automatisiert. Insbesondere wird mittels der Erfindung der Zeitbedarf für eine Erzeugung von Fertigungsreferenzwerten in der Produktdefinition (z. B. von Nennmaßen) reduziert, indem z. B. auf eine zusätzliche Erzeugung visueller Nennmaßangaben verzichtet wird. Diese sind insbesondere bereits durch die geometrische Ausprägung des Modells vollständig/hinreichend definiert und stehen somit z. B. einer automatischen rechnergestützten Weiterverarbeitung zur Verfügung, wodurch ein erhebliches Kosteneinsparungspotential bereits innerhalb der Design-Abteilungen erreicht wird. Weiterhin kann insbesondere durch den verringerten Zeitbedarf für die Bereitstellung der Fertigungsinformationen sowie die automatisierte Verwendung des dreidimensionalen Modells in den Nachfolgeprozessen die time-to-market-time reduziert werden, was beispielsweise zusätzlich Kosten reduziert.

Je nach Ausgestaltung der Fertigungsmaschine bzw. des Fertigungssystems kann beispielsweise das Vermessungsgerät als separates Vermessungsgerät des Fertigungssystems realisiert sein oder als integrales Vermessungsgerät der Fertigungsmaschine realisiert sein. Es ist beispielsweise auch möglich, dass die Fertigungsmaschine ein weiteres Vermessungsgerät (analog zum bereits genannten Vermessungsgerät) umfasst.

Das Fertigungssystem kann beispielsweise auch mehrere Fertigungsmaschinen umfassen, wobei das Fertigungssystem ein Auswahlmodul umfasst, das anhand des dreidimensionalen Modells und der Fertigungsanweisungen eine geeignete Fertigungsmaschine zum Ausführen der Fertigungsanweisungen auswählt. Insbesondere können auch mehrere Fertigungsmaschinen für die Abarbeitung der Fertigungsanweisungen benötigt werden, dabei bestimmt das Auswahlmodul bzw. das Fertigungssystem anhand der Fertigungsanweisungen und/oder des dreidimensionalen Modells die dafür notwenigen Fertigungsmaschinen und steuert ggf. den Fertigungsprozess und die Reihenfolge der Bearbeitung (z. B. die Reihenfolge der Abarbeitung der Fertigungsanweisungen oder die Reihenfolge der Fertigungsmaschinen, die die Fertigungsanweisungen abarbeiten) des zu fertigenden Objektes. Insbesondere kann das Auswahlmodul bzw. das Fertigungssystem anhand der Fertigungsanweisungen und/oder des dreidimensionalen Modells den Fertigungsprozess unter Berücksichtigung eines vorgegebenen Kriteriums optimieren. Beispielsweise kann das vorgegebene Kriterium vorgeben, dass die Fertigungszeit minimiert wird, die Fertigungskosten minimiert werden oder die Qualität maximiert wird (also die Abweichungen von den Fertigungsreferenzwerten minimiert werden). Entsprechend des vorgegebenen Kriteriums wählt z. B. das Auswahlmodul bzw. das Fertigungssystem entsprechende Fertigungsmaschinen, die das vorgegebene Kriterium für den Produktions- bzw. Fertigungsprozess für das zu fertigende Objekt einhalten. Sind die entsprechenden Fertigungsmaschinen ausgewählt, sendet das Auswahlmodul, z. B. mittels einer Bereitstellungsvorrichtung (z. B. die Vorrichtung die die auf den nachfolgenden Seiten ebenfalls erläutert wird), die bereits berechneten Steuerbefehle und/oder das dreidimensionale Modell und/oder die Fertigungsanweisungen an die entsprechenden Fertigungsmaschinen. Alternativ oder zusätzlich können beispielsweise die entsprechenden Fertigungsmaschinen die Steuerbefehle anhand des dreidimensionalen Modells und/oder der Fertigungsanweisungen selbst berechnen. Insbesondere können durch das Auswahlmodul und/oder der Bereitstellungsvorrichtung auch nur die Teile der berechneten Steuerbefehle und/oder des dreidimensionalen Modells und/oder der Fertigungsanweisungen an eine entsprechende Fertigungsmaschine übermitteln werden, die für eine Durchführung eines entsprechenden Arbeitsschrittes bzw. Fertigungsschrittes durch die entsprechende Fertigungsmaschine notwendig sind. Hierdurch wird insbesondere erreicht, nicht unnötig hohe Datenmengen zu versenden und die entsprechenden Fertigungsmaschinen können die geringeren Datenmengen auch leichter/schneller verarbeiten.

Bei einer weiteren Ausführungsform des Fertigungssystems wird mittels des Steuersignals bei einem Überschreiten von einem der entsprechenden Fertigungstoleranzwerte ein Verwerfen des zu fertigenden Objektes gesteuert. Alternativ oder zusätzlich wird mittels des Steuersignals bei einem Überschreiten von einem der entsprechenden Fertigungstoleranzwerte ein Nacharbeiten des zu fertigenden Objektes gesteuert. Alternativ oder zusätzlich wird mittels des Steuersignals bei einem Überschreiten von einem der entsprechenden Fertigungstoleranzwerte eine Herstellung eines Ersatzes für das zu fertigende Objekt gesteuert.

Das Fertigungssystem ist dahingehend vorteilhaft, um insbesondere frühzeitig zu erkennen, wenn das zu fertigende Objekt fehlerhaft ist, da es z. B. die entsprechenden Fertigungstoleranzwerte überschritten hat. Hierdurch kann insbesondere vermieden werden, dass für ein bereits fehlerhaftes Objekt noch weitere Maschinenzeit verbraucht wird. Dadurch wird insbesondere die Arbeitseffizienz des Fertigungssystems verbessert.

Bei einer weiteren Ausführungsform des Fertigungssystems wird mittels des Steuersignals bei einem Überschreiten von einem der entsprechenden Fertigungstoleranzwerte und/oder der entsprechenden Eingreiftoleranzwerten eine Neukalibrierung des Vermessungsgerätes und/oder der Fertigungsmaschine gesteuert. Alternativ oder zusätzlich wird mittels des Steuersignals bei einem Überschreiten von einem der entsprechenden Fertigungstoleranzwerte und/oder der entsprechenden Eingreiftoleranzwerte ein erneutes Erfassen und Überprüfen der entsprechenden Messwerte gesteuert. Alternativ oder zusätzlich wird mittels des Steuersignals bei einem Überschreiten von einem der entsprechenden Fertigungstoleranzwerte und/oder der entsprechenden Eingreiftoleranzwerten ein Austauschen eines Werkzeuges gesteuert.

Das Fertigungssystem ist dahingehend vorteilhaft, um insbesondere frühzeitig zu erkennen, wann ein Austauschen eines abgenutzten Werkzeuges erfolgen soll, um zu vermeiden, dass für das zu fertigende Objekt oder für noch später zu fertigende Objekte die Fertigungstoleranzwerte überschritten werden. Hierdurch kann insbesondere vermieden werden, dass fehlerhafte Objekte aufgrund von abgenutzten Werkzeugen produziert werden. Dadurch wird insbesondere die Arbeitseffizienz des Fertigungssystems verbessert.

Bei einer weiteren Ausführungsform des Fertigungssystems sind die Fertigungsanweisungen vorgegebenen Oberflächen des dreidimensionalen Modells zugeordnet.

Das Fertigungssystem ist dahingehend vorteilhaft, um insbesondere möglichst schnell auf die Fertigungsanweisungen zuzugreifen. Beispielsweise können die Fertigungsanweisungen zum Fertigen des Objektes für die entsprechenden zu fertigenden Strukturen am Werkstück dadurch gruppiert und aufgeteilt werden. Beispielsweise kann eine funktionale Aufteilung der Fertigungsanweisungen erfolgen, die beispielsweise Fertigungsanweisungen umfasst, die für gleichartige Oberflächenbearbeitungen erfolgen sollen. Beispielsweise kann durch die funktionale Aufteilung der Fertigungsanweisungen durch eine oder mehrere Gruppe von Fertigungsanweisungen ein gleichartiges Abschleifen (z. B. Abschleifen mit einem Exzenterschleifer mit einem Schleifpapier mit einer Körnung von 2000) von unterschiedlichen Oberflächen oder Bereichen des zu fertigenden Objektes definiert werden. Hierdurch wird insbesondere ein unnötiger Werkzeugwechsel vermieden und durch die vorgegebene funktionale Aufteilung der Fertigungsanweisungen kann schnell festgestellt werden, ob es gleichartige Fertigungsanweisungen gibt die in einem Arbeitsgang abgearbeitet werden können.

Bei einer weiteren Ausführungsform des Fertigungssystems erfolgt mittels der Steuerbefehle und/oder der Fertigungsanweisungen eine Auswahl eines oder mehrerer Werkzeuge, wobei insbesondere für die vorgegebenen Oberflächen des dreidimensionalen Modells voneinander verschiedene Werkzeuge ausgewählt werden können.

Das Fertigungssystem ist dahingehend vorteilhaft, um insbesondere das notwendige Werkzeug für die Abarbeitung einer der Fertigungsanweisungen nicht fest vorzugeben, sondern dass beispielsweise das für eine Umsetzung der Fertigungsanweisungen notwendige Werkzeug beim Fertigen des Objektes gewählt werden kann - z. B. anhand definierter Entscheidungskriterien durch die Werkzeugmaschine selbst. Hierdurch kann beispielsweise der Fertigungsprozess dahingehend automatisiert werden, dass insbesondere die Werkzeugmaschine oder das Fertigungssystem selbst entscheiden kann, welche Art von Werkzeug es wählt. Ist beispielsweise vorgegeben, dass das zu fertigende Objekt möglichst günstig gefertigt werden soll, aber die Fertigungszeit keine Rolle spielt, kann insbesondere ein Werkzeug und/oder Fertigungsart gewählt werden, die diese Anforderungen berücksichtigt (z. B. in dem die Fertigungsanweisungen durch eine sehr robuste aber langsam arbeitende Fräse umgesetzt werden). Soll beispielsweise das Objekt möglichst schnell gefertigt werden, kann beispielsweise ein Werkzeug und/oder Fertigungsart gewählt werden, die diese Anforderungen berücksichtigt (z. B. indem ein 3D-Druckverfahren verwendet wird)

Bei einer weiteren Ausführungsform des Fertigungssystems erfolgt mittels der Steuerbefehle und/oder der Fertigungsanweisungen unter Berücksichtigung eines Standortes der Fertigungsmaschine eine Auswahl eines oder mehrerer Werkzeuge, wobei insbesondere für die vorgegebenen Oberflächen des dreidimensionalen Modells voneinander verschiedene Werkzeuge ausgewählt werden können.

Das Fertigungssystem ist dahingehend vorteilhaft, um insbesondere anhand der am Standort der Fertigungsmaschine verfügbaren Werkzeuge ein passendes Werkzeug zur Abarbeitung der Fertigungsanweisungen zu verwenden. Hierdurch wird insbesondere vermieden, dass eine Abarbeitung der Fertigungsanweisungen am Standort der Fertigungsmaschine nicht durchgeführt wird, weil das vorgegebene Werkzeug gerade nicht verfügbar ist, obwohl andere ähnliche Werkzeuge ebenfalls die Fertigungsanweisungen umsetzen könnten. Entsprechend wird insbesondere erreicht, dass eine Abarbeitung der Fertigungsanweisungen am Standort der Fertigungsmaschine auch dann durchgeführt wird, wenn z. B. das ursprünglich in den Fertigungsanweisungen definierte Werkzeug am Standort nicht zur Verfügung steht, diese Fertigungsanweisungen jedoch auch von einem anderen Werkzeug für die Fertigung des Objektes ausgeführt werden können.

Bei einer weiteren Ausführungsform des Fertigungssystems erfolgt die Auswahl eines entsprechenden Werkzeuges anhand der zugehörigen Fertigungsreferenzwerte und/oder der Fertigungstoleranzwerte und/oder der Eingreiftoleranzwerte.

Das Fertigungssystem ist dahingehend vorteilhaft, um insbesondere Werkzeuge zu wählen, die beispielsweise eine möglichst geringe Abweichung von den Fertigungsreferenzwerten verursachen. Beispielsweise können für die Auswahl zusätzlich die Messwerte berücksichtigt werden. Sollen beispielsweise möglichst viele Objekte in kurzer Zeit gefertigt werden, kann ein Werkzeug gewählt werden, das bisher sehr geringe Abweichungen von den Fertigungsreferenzwerten aufweist und damit beispielsweise lange eingesetzt werden kann, bevor es gewechselt wird. Auf die gleiche Weise kann beispielsweise auch eine Fertigungsmaschine gewählt werden, die bisher sehr geringe Abweichungen von den Fertigungsreferenzwerten erzeugt und damit beispielsweise der Fertigungsprozess nicht von einem Wartungsintervall unterbrochen wird.

Bei einer weiteren Ausführungsform des Fertigungssystems wird das dreidimensionale Modell von einer Bereitstellungsvorrichtung an das Fertigungssystem und/oder die Fertigungsmaschine und/oder das Vermessungsgerät übermittelt.

Das Fertigungssystem ist dahingehend vorteilhaft, um insbesondere das dreidimensionale Modell über einen Bus und/oder ein Kommunikationsnetzwerk bereitzustellen. Die Bereitstellungsvorrichtung kann beispielsweise eine Sendevorrichtung sein oder eine verteilte Datenbank oder eine verteilte Datenstruktur die das dreidimensionale Modell vollständig oder teilweise an das Vermessungsgerät und/oder die Fertigungsmaschine überträgt.

Bei einer weiteren Ausführungsform des Fertigungssystems berücksichtigen die Fertigungsanweisungen notwendige Voraussetzungen für nachfolgende Fertigungsanweisungen.

Das Fertigungssystem ist dahingehend vorteilhaft, damit insbesondere bei der Fertigung Voraussetzungen für eine Durchführung/Abarbeitung der Fertigungsanweisungen durch eine Fertigungsmaschine berücksichtigt werden können. Diese Voraussetzungen können eine Reihenfolge von Bearbeitungsschritten des zu fertigenden Objektes vorgeben oder definieren Materialüberstände, die z. B. für den nächsten Verarbeitungsschritt notwendig sind. Eine erfindungsgemäße Fertigungsmaschine wertet bzw. berücksichtigt beispielsweise diese Voraussetzungen und lässt bei der Abarbeitung einer ersten Fertigungsanweisung genügend Material übrig, dass z. B. eine oder mehrere nachfolgende Fertigungsanweisungen für die Fertigung des Objektes noch durchgeführt werden können. Die entsprechenden Voraussetzungen können beispielsweise in den Fertigungsanweisungen gespeichert bzw. von den Fertigungsanweisungen umfasst sein.

Bei einer weiteren Ausführungsform des Fertigungssystems geben die Fertigungsanweisungen und das dreidimensionale Modell zu fertigende Strukturen für das zu fertigende Objekt vor.

Das Fertigungssystem ist dahingehend vorteilhaft, um insbesondere die zu fertigenden Strukturen (z. B. dreidimensionale geometrische Strukturen) für das zu fertigende Objekt vorzugeben. Die Fertigungsanweisungen umfassen beispielsweise Anweisungen und/oder Angaben und/oder Vorgaben, damit zu fertigende Strukturen (z. B. geometrische Strukturen wie Ausbuchtungen, Oberflächenbearbeitungen wie Schleifen oder Beschichten) an den vorgegebenen Positionen am zu fertigenden Objekt gefertigt werden können. Insbesondere entsprechen die entsprechenden Positionen der zu fertigenden Strukturen am dreidimensionalen Modell den Positionen der Strukturen, die am zu fertigenden Objekt erstellt werden. Mit anderen Worten sind damit die zu fertigenden Strukturen räumlich bzw. geometrisch durch die vorgegebenen Positionen bereits am dreidimensionalen Modell mittels der Fertigungsanweisungen festgelegt, wobei die vorgegebenen Positionen am dreidimensionalen Modell den realen Positionen der zu fertigenden Strukturen am zu fertigenden Objekt entsprechen.

Bei einer weiteren Ausführungsform des Fertigungssystems wird die Auswahl eines entsprechenden Werkzeuges abhängig von den zugehörigen Fertigungsreferenzwerten und/oder den Fertigungstoleranzwerten und/oder den Eingreiftoleranzwerten optimiert.

Das Fertigungssystem ist dahingehend vorteilhaft, um insbesondere die Fertigung des zu fertigenden Objektes anhand eines vorgegebenen Kriteriums zu optimieren. Beispielsweise kann das vorgegebene Kriterium vorgeben, dass die Fertigungszeit minimiert wird, die Fertigungskosten minimiert werden oder die Qualität maximiert wird (also die Abweichungen von den Fertigungsreferenzwerten minimiert werden). Beispielsweise kann beim Minimieren der Fertigungskosten ein weniger präzises, dafür kostengünstiges Werkzeug gewählt werden. Beispielsweise kann beim Minimieren der Fertigungszeit ein präzises und/oder besseres Werkzeug gewählt werden, das eine hohe Verarbeitungsgeschwindigkeit aufweist. Beispielsweise kann auch eine Optimierung für eine entsprechende vorgegebene Oberfläche/Position/Struktur und den zugehörigen Fertigungsreferenzwerten und/oder den Fertigungstoleranzwerten und/oder den Eingreiftoleranzwerten erfolgen. Beispielsweise kann beim erhöhen der Qualität des zu fertigenden Objektes ein präzises und/oder besseres Werkzeug gewählt werden, das eine höhere Fertigungsgenauigkeit aufweist bzw. erlaubt.

Gemäß einem weiteren Aspekt betrifft die Erfindung eine Vorrichtung aufweisend:
- ein Bereitstellungsmodul zum Bereitstellen eines dreidimensionalen Modells, wobei
   - das dreidimensionale Modell Fertigungsanweisungen für eine Fertigungsmaschine umfasst,
   - mittels des dreidimensionalen Modells und der Fertigungsanweisungen Steuerbefehle durch die Fertigungsmaschine berechnet werden;
   - mittels des dreidimensionalen Modells, der Fertigungsanweisungen und der Steuerbefehle die Fertigungsmaschine derart konfiguriert wird, dass ein zu dem dreidimensionalen Modell korrespondierendes Objekt gefertigt wird.

Die Vorrichtung ist dahingehend vorteilhaft um das dreidimensionale Modell dem Fertigungssystem und/oder der Fertigungsmaschine und/oder dem Vermessungsgerät zu übermitteln bzw. zu senden. Hierzu kann beispielsweise das Bereitstellungsmodul als Kommunikationsmodul ausgebildet sein. Die Vorrichtung kann beispielsweise eine verteilte Datenbank sein, wie beispielsweise eine Blockkette, eine Peer-to-Peer Datenbank oder ein Cloud-Service. Alternativ oder zusätzlich kann beispielsweise das Bereitstellungsmodul zum Authentisieren eines Empfängers des dreidimensionalen Modells eingerichtet sein, damit insbesondere sichergestellt wird, dass z. B. nur berechtigte Empfänger (z. B. das Fertigungssystem und/oder die Fertigungsmaschine und/oder das Vermessungsgerät) das dreidimensionale Modell empfangen. Hierzu können insbesondere die Empfänger mit der Vorrichtung dafür notwendige (Sicherheits-)Credentials (z. B. kryptographische Schlüssel, digitale Signaturen oder Passwörter) oder andere dafür geeignete Daten austauschen, die z. B. von der Vorrichtung überprüft werden. Alternativ oder zusätzlich kann beispielsweise das Bereitstellungsmodul einem entsprechenden Empfänger nur die notwendigen Teile der Daten des dreidimensionalen Modells übermitteln, die für eine Ausführung der entsprechenden Fertigungsanweisungen oder des Überprüfens notwendig sind. Hierzu können beispielsweise entsprechende empfängerspezifische Profile in einem Konfigurationsspeicher der Vorrichtung gespeichert sein, die z. B. angeben für welchen Empfänger welche Teile der Daten (z. B. Fertigungsreferenzwerte und/oder die Fertigungstoleranzwerte und/oder die Eingreiftoleranzwerte und/oder die Fertigungsanweisungen usw.) des dreidimensionalen Modells übermittelt werden dürfen. Es ist beispielsweise auch denkbar, dass die entsprechenden Empfänger den Umfang der von ihnen benötigten Daten des dreidimensionalen Modells automatisiert (z. B. an die Vorrichtung) übermitteln. Dies erfolgt beispielsweise während der Installation von Empfängern im Fertigungssystem oder während einer Wartung des Fertigungssystems oder wenn das Fertigungssystem in einen Konfigurationsmodus versetzt ist.

Bei einer weiteren Ausführungsform der Vorrichtung sind den jeweiligen Fertigungsanweisungen Fertigungsreferenzwerte und/oder Fertigungstoleranzwerte und/oder Eingreiftoleranzwerte zugeordnet, wobei insbesondere die Eingreiftoleranzwerte eine geringere Abweichung von Fertigungsreferenzwerten zulassen als die Fertigungstoleranzwerte.

Die Vorrichtung ist dahingehend vorteilhaft, um insbesondere das dreidimensionale Modell mit den Fertigungsanweisungen (z. B. Fertigungsdaten) dem Fertigungssystem und/oder der Fertigungsmaschine und/oder dem Vermessungsgerät zu übermitteln bzw. zu senden. Bei einem dreidimensionalen Modell, das sehr viele Daten umfasst, kann die Vorrichtung beispielsweise nur den notwendigen Teil der Daten des dreidimensionalen Modells für das Fertigungssystem und/oder die Fertigungsmaschine und/oder das Vermessungsgerät bereitstellen.

Bei einer weiteren Ausführungsform der Vorrichtung werden Messwerte für das zu fertigende Objekt durch ein Vermessungsgerät erfasst, wobei mittels der Fertigungsreferenzwerte und/oder der Fertigungstoleranzwerte und/oder Eingreiftoleranzwerte das Vermessungsgerät derart konfiguriert wird, dass bei einer Abweichung von Messwerten von den entsprechenden Fertigungstoleranzwerten und bei einer Überschreitung der zugehörigen Fertigungstoleranzwerten und/oder der zugehörigen Eingreiftoleranzwerten ein Steuersignal bereitgestellt wird.

Gemäß einem weiteren Aspekt betrifft die Erfindung eine Fertigungsmaschine umfassend
- ein erstes Kommunikationsmodul zum Empfangen eines dreidimensionalen Modells und/oder von Steuerbefehlen, wobei das dreidimensionale Modell Fertigungsanweisungen für die Fertigungsmaschine umfasst;
- insbesondere ein Berechnungsmodul, wobei das Berechnungsmodul mittels des dreidimensionalen Modells und der Fertigungsanweisungen Steuerbefehle berechnet;
- ein Fertigungsmodul, wobei mittels des dreidimensionalen Modells, der Fertigungsanweisungen und der Steuerbefehle die Fertigungsmaschine derart konfiguriert wird, dass ein zu dem dreidimensionalen Modell korrespondierendes Objekt gefertigt wird.

Bei einer weiteren Ausführungsform oder mehreren weiteren Ausführungsformen der Fertigungsmaschine umfasst die Fertigungsmaschine zumindest ein weiteres Merkmal oder mehrere weitere Merkmale, um Ausführungsformen (z. B. funktionale Merkmale) des Fertigungssystems und/oder der Vermessungsgerät analog nachzubilden.

Gemäß einem weiteren Aspekt betrifft die Erfindung ein Vermessungsgerät umfassend:
- ein zweites Kommunikationsmodul zum Empfangen eines dreidimensionalen Modells, wobei
   - das dreidimensionale Modell Fertigungsanweisungen umfasst,
   - den jeweiligen Fertigungsanweisungen Fertigungsreferenzwerte und/oder Fertigungstoleranzwerte und/oder Eingreiftoleranzwerte zugeordnet sind;
- ein Erfassungsmodul, wobei
   - das Erfassungsmodul mittels Sensoren Messwerte für ein gefertigtes Objekt erfasst,
   - das Objekt anhand des dreidimensionale Modells und der Fertigungsanweisungen gefertigt ist,
   - die Messwerte jeweils für die Fertigungsreferenzwerte und/oder die Fertigungstoleranzwerte und/oder Eingreiftoleranzwerte erfasst werden;
- ein Überprüfungsmodul, wobei
   - insbesondere mittels der Messwerte überprüft wird, ob das gefertigte Objekt die Referenzwerte und/oder die Toleranzwerte einhält,
   - insbesondere die Messwerte mit den Referenzwerte und/oder die Toleranzwerte abgeglichen werden,
   - insbesondere einer Abweichung der Messwerte von den entsprechenden Fertigungsreferenzwerte und bei einer Überschreitung der zugehörigen Fertigungstoleranzwerten und/oder der zugehörigen Eingreiftoleranzwerten ein Steuersignal bereitgestellt wird;

Bei einer weiteren Ausführungsform oder mehreren weiteren Ausführungsformen des Vermessungsgerätes umfasst das Vermessungsgerät zumindest ein weiteres Merkmal oder mehrere weitere Merkmale, um Ausführungsformen (z. B. funktionale Merkmale) des Fertigungssystems und/oder der Fertigungsmaschine analog nachzubilden.

Gemäß einem weiteren Aspekt betrifft die Erfindung ein Verfahren zum rechnergestützten Fertigen eines Objektes mittels einer Fertigungsmaschine mit folgenden Verfahrensschritten
- Empfangen eines dreidimensionalen Modells und/oder von Steuerbefehlen, wobei das dreidimensionale Modell Fertigungsanweisungen für die Fertigungsmaschine umfasst;
- Fertigen eines zu dem dreidimensionalen Modell korrespondierendes Objektes, wobei mittels des dreidimensionalen Modells, der Fertigungsanweisungen und der Steuerbefehle die Fertigungsmaschine derart konfiguriert wird, dass das Objekt gefertigt wird.

Bei einer weiteren Ausführungsform oder mehreren weiteren Ausführungsformen des Verfahrens umfasst das Verfahren zumindest ein weiteres Merkmal oder mehrere weitere Merkmale, um Ausführungsformen (z. B. funktionale Merkmale) der Fertigungsmaschine analog nachzubilden.

Gemäß einem weiteren Aspekt betrifft die Erfindung ein Verfahren zum rechnergestützten Überprüfen eines mittels einer Fertigungsmaschine gefertigten Objektes und/oder einer Fertigungsmaschine mit folgenden Verfahrensschritten:
- Empfangen eines dreidimensionalen Modells, wobei
   - das dreidimensionale Modell Fertigungsanweisungen umfasst,
   - den jeweiligen Fertigungsanweisungen Fertigungsreferenzwerte und/oder Fertigungstoleranzwerte und/oder Eingreiftoleranzwerte zugeordnet sind;
- Erfassen von Messwerten, wobei
   - die Messwerte mittels Sensoren für das gefertigtes Objekt erfasst werden,
   - das Objekt anhand des dreidimensionale Modells und der Fertigungsanweisungen gefertigt ist,
   - die Messwerte jeweils für die Fertigungsreferenzwerte und/oder die Fertigungstoleranzwerte und/oder die Eingreiftoleranzwerte erfasst werden;
- Überprüfen der Messwerte, wobei
   - insbesondere mittels der Messwerte überprüft wird, ob das gefertigte Objekt die Referenzwerte und/oder die Toleranzwerte einhält,
   - insbesondere die Messwerte mit den Referenzwerte und/oder die Toleranzwerte abgeglichen werden,
   - insbesondere bei einer Abweichung der Messwerte von den entsprechenden Fertigungsreferenzwerten und bei einer Überschreitung der zugehörigen Fertigungstoleranzwerten und/oder der zugehörigen Eingreiftoleranzwerten ein Steuersignal bereitgestellt wird.

Bei einer weiteren Ausführungsform oder mehreren weiteren Ausführungsformen des Verfahrens umfasst das Verfahren zumindest ein weiteres Merkmal oder mehrere weitere Merkmale, um Ausführungsformen (z. B. funktionale Merkmale) des Vermessungsgerätes analog nachzubilden.

Gemäß einem weiteren Aspekt betrifft die Erfindung ein Verfahren zum rechnergestützten Fertigen eines Objektes mittels einer Fertigungsmaschine mit folgenden Verfahrensschritten:
- Empfangen eines dreidimensionalen Modells und/oder von Steuerbefehlen, wobei
   - das dreidimensionale Modell Fertigungsanweisungen umfasst,
   - den jeweiligen Fertigungsanweisungen Fertigungsreferenzwerte und/oder Fertigungstoleranzwerte zugeordnet sind;
- Fertigen eines zu dem dreidimensionalen Modell korrespondierendes Objektes, wobei mittels des dreidimensionalen Modells, der Fertigungsanweisungen und der Steuerbefehle die Fertigungsmaschine derart konfiguriert wird, dass Objekt gefertigt wird.
- Erfassen von Messwerten, wobei
   - die Messwerte mittels Sensoren für das gefertigtes Objekt erfasst werden,
   - die Messwerte jeweils für die Fertigungsreferenzwerte und/oder die Fertigungstoleranzwerte und/oder die Eingreiftoleranzwerte erfasst werden;
- Überprüfen der Messwerte, wobei
   - insbesondere mittels der Messwerte überprüft wird, ob das gefertigte Objekt die Referenzwerte und/oder die Toleranzwerte einhält,
   - insbesondere die Messwerte mit den Referenzwerte und/oder die Toleranzwerte abgeglichen werden,
   - insbesondere bei einer Abweichung der Messwerte von den entsprechenden Fertigungsreferenzwerten und bei einer Überschreitung der zugehörigen Fertigungstoleranzwerten und/oder der zugehörigen Eingreiftoleranzwerten ein Steuersignal bereitgestellt wird.

Bei einer weiteren Ausführungsform oder mehreren weiteren Ausführungsformen des Verfahrens umfasst das Verfahren zumindest ein weiteres Merkmal oder mehrere weitere Merkmale, um Ausführungsformen (z. B. funktionale Merkmale) des Fertigungssystems analog nachzubilden.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die erfindungsgemäße Vorrichtung und/oder das erfindungsgemäße Fertigungssystem und/oder die erfindungsgemäße Fertigungsmaschine und/oder das erfindungsgemäße Vermessungsgerät erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Vorrichtung und/oder das erfindungsgemäße Fertigungssystem und/oder die erfindungsgemäße Fertigungsmaschine und/oder das erfindungsgemäße Vermessungsgerät erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein zweites Ausführungsbeispiel der Erfindung;
- Fig. 3: ein drittes Ausführungsbeispiel der Erfindung;
- Fig. 4: ein viertes Ausführungsbeispiel der Erfindung;
- Fig. 5: ein fünftes Ausführungsbeispiel der Erfindung;
- Fig. 6: ein sechstes Ausführungsbeispiel der Erfindung;
- Fig. 7: ein siebtes Ausführungsbeispiel der Erfindung;
- Fig. 8: ein weiteres Ausführungsbeispiel der Erfindung;
- Fig. 9: ein weiteres Ausführungsbeispiel der Erfindung;
- Fig. 10: ein weiteres Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies explizit in dem jeweiligen Ausführungsbeispiel genannt sein muss.

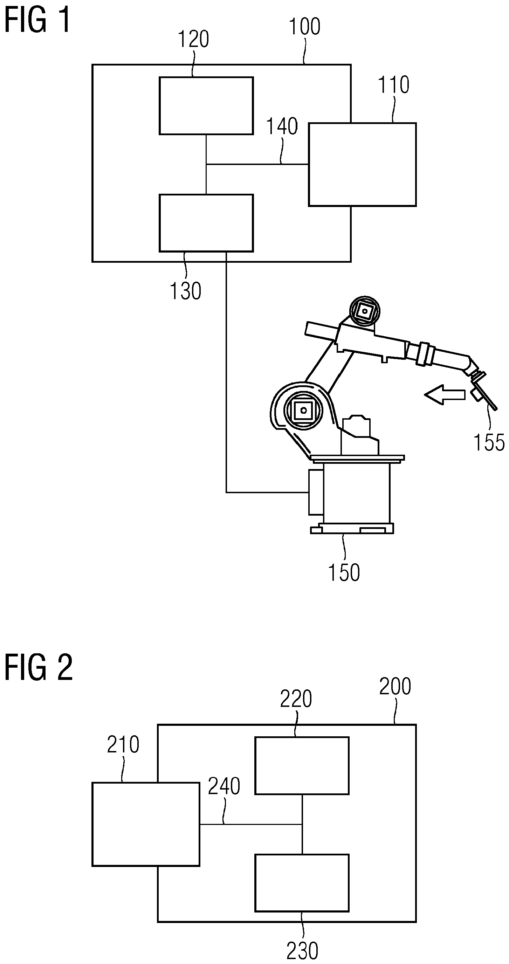

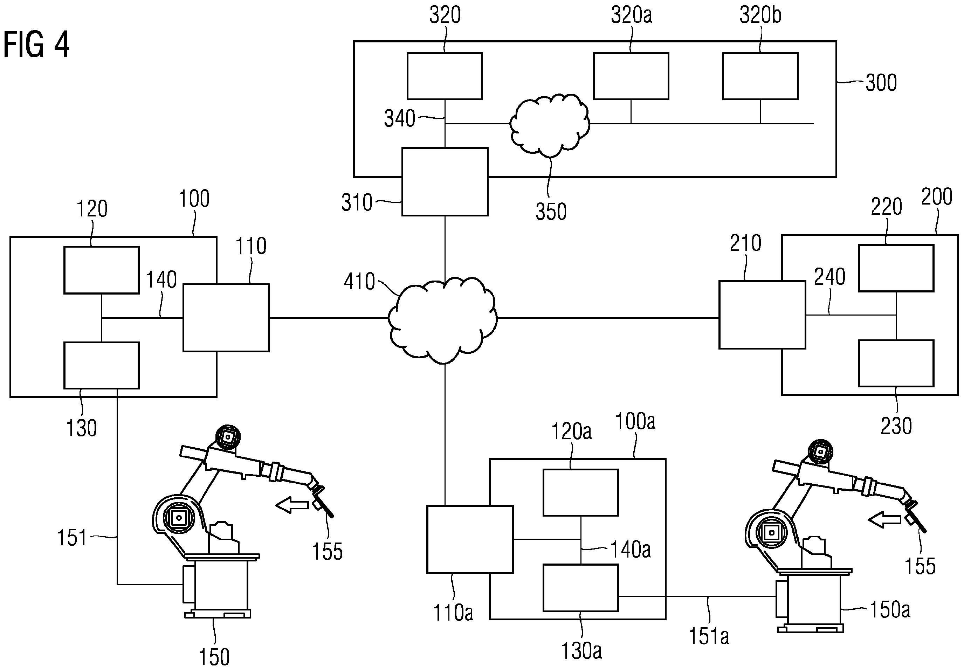

Die Fig. 1 - 3 zeigen die einzelnen Komponenten (Fertigungsmaschine 100 (z. B. eine Drehmaschine, eine Fräsmaschine, ein Dreh-/Fräszentrum, eine Schleifmaschine), Vermessungsgerät 200 (z. B. ein Koordinatenmessgerät, Laserscanner), Vorrichtung 300 (z. B. ein Vorrichtung mit einer CAD-Software, PDM/PLM-System/Software, CAM-Software, CMM-Software, DNC-Server, CAQ-Software)) eines Fertigungssystems. Bei dem Fertigungssystem kann es sich beispielsweise um das Fertigungssystem aus Fig. 4 handeln.

Die Fertigungsmaschine 100 umfasst ein erstes Kommunikationsmodul 110, ein optionales Berechnungsmodul 120 und ein Fertigungsmodul 130, die über einen Bus 140 kommunikativ miteinander verbunden sind.

Das Berechnungsmodul 120 kann implementierungsabhängig beispielsweise als ein eigenständiges Berechnungsmodul des Fertigungssystems ausgebildet sein oder von der Vorrichtung 300 umfasst sein oder von der Fertigungsmaschine umfasst sein.

Die Fertigungsmaschine 100 kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor), und eine Ein-/Ausgabeeinheit zum Verbinden von Sensoren und/oder Werkzeugen und/oder Aktoren. Der Prozessor kann beispielsweise mehrere weitere Prozessoren umfassen, die insbesondere zur Realisierung von weiteren Ausführungsbeispielen verwendet werden können. Die genannten Komponenten oder weitere/n Komponente/n können beispielsweise ebenfalls über den Bus 140 miteinander kommunikativ verbunden sein.

Bei dem Prozessor kann es sich beispielsweise um einen ASIC handeln, der anwendungsspezifisch für die Funktionen eines jeweiligen Moduls (oder einer Einheit) oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Kommunikationsmodul 110 ist zum Empfangen eines dreidimensionalen Modells und/oder von Steuerbefehlen eingerichtet. Das dreidimensionale Modell umfasst Fertigungsanweisungen, wobei den jeweiligen Fertigungsanweisungen Fertigungsreferenzwerte und/oder Fertigungstoleranzwerte und/oder Eingreiftoleranzwerte zugeordnet sind.

Werden beispielsweise Steuerbefehle empfangen und durch die Fertigungsmaschine 100 nicht selbst berechnet, handelt es sich bei den Steuerbefehlen, um Steuerbefehle, die für die Fertigungsmaschine 100 anhand des dreidimensionalen Modells und der Fertigungsanweisungen berechnet wurden. Insbesondere werden diese Steuerbefehle gerätespezifisch berechnet. Mit anderen Worten handelt es sich insbesondere um gerätespezifische Steuerbefehle.

Bei dem ersten Kommunikationsmodul 110 kann es sich beispielsweise um eine Netzwerkschnittstelle handeln (WLAN oder Kabelgebunden) mittels der das dreidimensionale Modell an die Fertigungsmaschine 100 beispielsweise von der Vorrichtung 300 übermittelt/gesendet wird. Das dreidimensionale Modell gibt dabei beispielsweise die Geometrie bzw. die zu fertigenden Strukturen für das zu fertigende Objekt z. B. mittels der entsprechenden Fertigungsreferenzwerte vor. Die Fertigungsanweisungen geben dabei beispielsweise vor wann mit welcher Art von Bearbeitung die zu fertigenden Strukturen z. B. mittels eines Werkzeuges durch die Fertigungsmaschine erstellt werden. Die entsprechenden Fertigungstoleranzwerte geben dabei insbesondere an, welche Abweichungen für einen entsprechenden Fertigungsreferenzwert für das zu fertigende Objekt bei einer gefertigten Struktur akzeptiert werden ohne das zu fertigende Objekt (z. B. ein Werkstück) als fehlerhaft zu betrachten.

Die Fertigungsanweisungen sind dabei Oberflächen bzw. zu fertigenden Strukturen, die durch das dreidimensionale Modell vorgegeben werden bzw. durch dieses abgebildet sind, zu geordnet. Dies erfolgt beispielsweise durch ein Speichern eines entsprechenden Datensatzes, der vorzugsweise über eine Adresse oder einen eindeutigen Identifizierer den entsprechenden Oberflächen bzw. zu fertigenden Strukturen zugeordnet sind.

Die Fertigungsreferenzwerte und/oder die Fertigungstoleranzwerte und/oder die Eingreiftoleranzwerte können beispielsweise den Oberflächen bzw. den zu fertigenden Strukturen zugeordnet sein. Die Fertigungsreferenzwerte können beispielsweise die Oberflächen bzw. die zu fertigenden Strukturen zugeordnet vorgeben bzw. definieren. Entsprechend sind den Fertigungsanweisungen die Fertigungsreferenzwerte und/oder die Fertigungstoleranzwerte und/oder die Eingreiftoleranzwerte können zugeordnet sein. Je nach Implementierung können die Fertigungsanweisungen auch die Fertigungsreferenzwerte und/oder die Fertigungstoleranzwerte und/oder die Eingreiftoleranzwerte umfassen. Alternativ können auch die Fertigungsreferenzwerte auch die Fertigungsanweisungen und/oder die Fertigungstoleranzwerte und/oder die Eingreiftoleranzwerte umfassen.

Das Berechnungsmodul 120 ist zum Berechnen von Steuerbefehlen anhand des dreidimensionalen Modells und der Fertigungsanweisungen eingerichtet.

Beim Berechnen der Steuerbefehle wird z. B. anhand des dreidimensionalen Modells und der Fertigungsanweisungen bestimmt, welche Werkzeuge und/oder welche CNC-Befehle notwendig sind, um das zu fertigende Werkstück herzustellen bzw. wie ein entsprechendes Werkzeug zum Erzeugen einer zu fertigenden Struktur (z. B. ein Bohrloch) angesteuert werden muss, damit z. B. die Fertigungstoleranzwerte eingehalten werden. Dabei werden beispielsweise auch Steuerbefehle berechnet, wie ein Werkzeug räumlich orientiert werden muss, damit eine entsprechende Struktur gefertigt werden kann.

Beispielsweise kann mittels der Steuerbefehle ein Roboter 150 angesteuert werden, der mit einem Werkzeug 155 das zu fertigende Objekt bzw. eine zu fertigende Struktur an einem Werkstück erzeugt. Die Fertigungsmaschine 100 kann dabei den Roboter 150 umfassen und für den Roboter das passende Werkzeug 155 auswählen, damit das zu fertigende Objekt erstellt werden kann.

Für die Werkzeugauswahl kann die Fertigungsmaschine beispielsweise eine Werkzeugdatenbank umfassen, mittels der die verfügbaren Werkzeuge verwaltet werden können. Die Werkzeugdatenbank kann beispielsweise Werkzeugeigenschaften bereitstellen, die für eine Werkzeugauswahl notwendig ist. Die Werkzeugeigenschaften können dabei beispielsweise sein, wie hoch/stark die Abweichungen von Fertigungsreferenzwert eines entsprechenden Werkzeuges sind, wenn mittels des entsprechenden Werkzeuges ein Werkstück bearbeitet wird. Zusätzlich oder alternativ können beispielsweise Verwendungskosten, Energieverbrauch oder eine Bearbeitungsgeschwindigkeit des entsprechenden Werkzeuges in den Werkzeugeigenschaften gespeichert bzw. von diesen umfasst sein. Diese Werkzeugeigenschaften können beispielsweise bei einer Optimierung der Fertigungsanweisungen bzw. des Fertigungsprozesses des zu fertigendes Objektes berücksichtigt werden.

Es können neue oder ausgetauschte Werkzeuge in der Werkzeugdatenbank gespeichert werden oder auch ein verbrauchtes Werkzeug aus der Datenbank entfernt werden. Dies wird vorzugsweise automatisiert durchgeführt indem die entsprechenden Werkzeuge mit entsprechenden Datenverarbeitungsgeräten und/oder Datenkommunikationsgeräten (z. B. RFID-Chips) ausgestattet sind bzw. diese umfassen, welche die Werkzeugeigenschaften für ein entsprechendes Werkzeug umfassen (also speichern) und vorzugsweise automatisiert durch ein entsprechendes Kommunikationsgerät (z. B. ein RFID-Lesegerät) in der Werkzeugdatenbank gespeichert werden. Wird beispielsweise erkannt, dass z. B. ein vorgegebener Mindestwert von Ersatzwerkzeugen (z. B. ein Mindestwert von 3) unterschritten wird, kann beispielsweise automatisiert eine Bestellung von weiteren Ersatzwerkzeugen durch die Werkzeugdatenbank veranlasst werden.

In einer Variante in der das Berechnungsmodul 120 beispielsweise als ein separates Berechnungsmodul des Fertigungssystems ausbildet ist, umfasst das Berechnungsmodul 120 beispielsweise ein entsprechendes Kommunikationsmodul, um das dreidimensionale Modell und/oder die Fertigungsanweisungen zu empfangen und die berechneten (gerätespezifischen) Steuerbefehle an eine Fertigungsmaschine (z. B. die Fertigungsmaschine 100) zu übermitteln. Das Fertigungssystem übernimmt dabei vorzugsweise die Auswahl der entsprechenden Fertigungsmaschine und steuert die Übermittlung der entsprechenden Daten.

Bei dem Kommunikationsmodul des Berechnungsmoduls 120 kann es sich beispielsweise um eine Netzwerkschnittstelle handeln (WLAN oder Kabelgebunden).

In einer Variante in der das Berechnungsmodul 120 beispielsweise von der Vorrichtung 300 umfasst ist, kann das dreidimensionale Modell und/oder die Fertigungsanweisungen über den Bus 340 an das Berechnungsmodul 120 übertragen werden. Entsprechend kann das Berechnungsmodul 120 die berechneten (gerätespezifischen) Steuerbefehle mittels des Kommunikationsmoduls 310 der Vorrichtung 300 an die entsprechende Fertigungsmaschine (z. B. die Fertigungsmaschine 100) übermitteln.

In einer weiteren Variante werden die Steuerbefehle im dreidimensionalen Modell (oder durch das dreidimensionale Modell) gespeichert. Dabei umfassen dann vorzugsweise die entsprechenden Fertigungsanweisungen die entsprechenden Steuerbefehle, die für diese bzw. eine entsprechende Fertigungsanweisungen berechnet wurden. Insbesondere wird hierdurch ein dreidimensionales Modell erzeugt, das spezifisch für die entsprechenden Steuerbefehle ist (das z. B. als ein steuerbefehlspezifisches dreidimensionales Modell bezeichnet werden kann). Alternativ oder zusätzlich kann ein entsprechendes steuerbefehlspezifisches dreidimensionales Modell eine Adressierung für eine entsprechende Fertigungsmaschine umfassen, z. B. indem Fertigungsmaschinen jeweils eine UID umfassen und die entsprechende UID der gewählten Fertigungsmaschine ebenfalls durch das dreidimensionale Modell umfasst bzw. gespeichert ist. Bei einem solchen dreidimensionalen Modell kann es sich beispielsweise um ein fertigungsmaschinenenspezfisches dreidimensionales Modell handeln.

Das Fertigungsmodul 130 ist dabei dazu eingerichtet mittels des dreidimensionalen Modells, der Fertigungsanweisungen und der Steuerbefehle die Fertigungsmaschine derart zu konfigurieren, dass ein zu dem dreidimensionalen Modell korrespondierendes Objekt gefertigt wird. Hierzu kann die Fertigungsmaschine 100 und/oder das Fertigungsmodul 130 eine zusätzliche Kommunikationsschnittstelle umfassen (oder das erste Kommunikationsmodul 110 nutzen) um z. B. den Roboter 150 anzusteuern, dass dieser das für die Abarbeitung der Fertigungsanweisungen das entsprechende Werkzeug 155 wählt und ein entsprechenden Werkstück mit dem Werkzeug 155 bearbeitet.

Das Vermessungsgerät 200 umfasst ein zweites Kommunikationsmodul 210, ein Erfassungsmodul 220 und ein Überprüfungsmodul 230, die über einen Bus 240 kommunikativ miteinander verbunden sind.

Das Vermessungsgerät 200 kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor), und eine Ein-/Ausgabeeinheit zum Verbinden von Sensoren und/oder Werkzeugen und/oder Aktoren. Der Prozessor kann beispielsweise mehrere weitere Prozessoren umfassen, die insbesondere zur Realisierung von weiteren Ausführungsbeispielen verwendet werden können. Die genannten Komponenten oder weitere/n Komponente/n können beispielsweise ebenfalls über den Bus 240 miteinander kommunikativ verbunden sein.

Bei dem Prozessor kann es sich beispielsweise um einen ASIC handeln, der anwendungsspezifisch für die Funktionen eines jeweiligen Moduls (oder einer Einheit) oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das zweite Kommunikationsmodul ist zum Empfangen des dreidimensionalen Modells eingerichtet.

Bei dem zweiten Kommunikationsmodul 210 kann es sich beispielsweise um eine Netzwerkschnittstelle handeln (WLAN oder Kabelgebunden) mittels der das dreidimensionale Modell an das Vermessungsgerät 200 beispielsweise von der Vorrichtung 300 übermittelt/gesendet wird.

Das dreidimensionale Modell gibt dabei beispielsweise die Geometrie bzw. die zu fertigenden Strukturen für das zu fertigende Objekt z. B. mittels der entsprechenden Fertigungsreferenzwerte vor. Die Fertigungsanweisungen geben dabei beispielsweise vor, wann mit welcher Art von Bearbeitung die zu fertigenden Strukturen z. B. mittels eines Werkzeuges durch die Fertigungsmaschine erstellt werden. Die entsprechenden Fertigungstoleranzwerte geben dabei insbesondere an, welche Abweichungen für einen entsprechenden Fertigungsreferenzwert für das zu fertigende Objekt bei einer gefertigten Struktur akzeptiert werden ohne das zu fertigende Objekt (z. B. ein Werkstück) als fehlerhaft zu betrachten.

Die Eingreiftoleranzwerte geben dabei insbesondere an, wann in einen Fertigungsprozess zum Fertigen eines Objektes eingegriffen werden soll, um beispielsweise ein Werkzeug zu wechseln, damit verhindert wird, dass die Fertigungstoleranzwerte überschritten werden. Dies kann beispielsweise auch geschehen (oder Vorkonfiguriert sein), wenn die Bearbeitung eines Objektes abgeschlossen ist, sodass insbesondere ein Werkzeugwechsel stattfindet, bevor ein neues Objekt bearbeitet wird.

Das Erfassungsmodul 120 ist dazu eingerichtet mittels Sensoren Messwerte für das gefertigte Objekt zu erfassen. Die Messwerte werden dabei jeweils für die entsprechenden Fertigungsreferenzwerte von beispielsweise einer gefertigten Struktur und/oder für das gesamte zu fertigende Objekt erfasst. Die Sensoren können beispielsweise 3D-Scanner und/oder Oberflächenmikroskope und/oder 3D-Kammera sein.

Umfasst beispielsweise die Fertigungsmaschine 100 das Vermessungsgerät 200 können die Sensoren beispielsweise auch entsprechende Sensoren (z. B. Messtaster oder Laser-Scanner) der Fertigungsmaschine 100 sein, mit denen das Vermessungsgerät 200 kommunikativ verbunden ist.

Das Überprüfungsmodul 130 ist dazu eingerichtet mittels der Messwerte zu überprüfen, ob das gefertigte Objekt die Fertigungsreferenzwerte einhält. Mit anderen Worten wird z. B. überprüft ob die entsprechenden Messwerte von den entsprechenden Fertigungsreferenzwerten für das gefertigte Objekt bzw. einer gefertigten Struktur des Objektes von den Fertigungsreferenzwerten abweicht.

Wird beispielsweise eine Abweichung der Messwerte von den entsprechenden Fertigungsreferenzwerten festgestellt wird überprüft, ob die Messwerte die zugehörigen Fertigungstoleranzwerte und/oder der zugehörigen Eingreiftoleranzwerte einhält oder Überschreitet. Wird eine solche Überschreitung festgestellt, werden ein oder mehrere Steuersignale bereitgestellt. Hierdurch wird insbesondere überprüft, ob das gefertigte Objekt die Fertigungsreferenzwerte einhält. Sollten Abweichungen der Messwerte von den Fertigungsreferenzwerten erkannt bzw. ermittelt werden, diese jedoch innerhalb der Fertigungstoleranzwerte liegen oder die Messwerte den Fertigungsreferenzwerten entsprechen wird das zu fertigende Objekt als ein gültiges Objekt akzeptiert.

In einer Variante wird mittels des Steuersignals bei einem Überschreiten von einem der entsprechenden Fertigungstoleranzwerte ein Verwerfen des zu fertigenden Objektes gesteuert.

In einer weiteren Variante wird mittels des Steuersignals bei einem Überschreiten von einem der entsprechenden Fertigungstoleranzwerte ein Nacharbeiten des zu fertigenden Objektes gesteuert.

In einer weiteren Variante wird mittels des Steuersignals bei einem Überschreiten von einem der entsprechenden Fertigungstoleranzwerte eine Herstellung eines Ersatzes für das zu fertigende Objekt gesteuert.

In einer weiteren Variante wird mittels des Steuersignals bei einem Überschreiten von einem der entsprechenden Fertigungstoleranzwerte und/oder der entsprechenden Eingreiftoleranzwerten eine Neukalibrierung des Vermessungsgerätes und/oder der Fertigungsmaschine gesteuert.

In einer weiteren Variante wird mittels des Steuersignals bei einem Überschreiten von einem der entsprechenden Fertigungstoleranzwerte und/oder der entsprechenden Eingreiftoleranzwerten ein erneutes Erfassen und Überprüfen der entsprechenden Messwerte gesteuert.

In einer weiteren Variante wird mittels des Steuersignals bei einem Überschreiten von einem der entsprechenden Fertigungstoleranzwerte und/oder der entsprechenden Eingreiftoleranzwerten ein Austauschen eines Werkzeuges gesteuert.

In einer weiteren Variante wird ein weiteres Steuersignal bei einem Einhalten der entsprechenden Fertigungstoleranzwerte und/oder der entsprechenden Eingreiftoleranzwerte bereitgestellt.

Das weitere Steuersignal oder das Steuersignal kann beispielsweise auch eine Angabe/Datensatz umfassen, der angibt wie stark die entsprechenden Messwerte von den zugehörigen Fertigungsreferenzwerten abweichen, um beispielsweise eine Qualitätsangabe für das fertigende Objekt zu bestimmen oder eine Qualitätsangabe für die Fertigungsmaschine zu bestimmen.

Die Vorrichtung 300 umfasst ein Bereitstellungsmodul 310 zum Bereitstellen des dreidimensionalen Modells. Die Vorrichtung kann das dreidimensionale Modell dem Fertigungssystem und/oder der Fertigungsmaschine und/oder dem Vermessungsgerät zu übermitteln bzw. zu senden.

Das dreidimensionale Modell kann beispielsweise von einem Speichermodul 320 gespeichert sein. Das Bereitstellungsmodul 310 ruft den Teil des dreidimensionalen Modells ab (z. B. von dem Speichermodul 320), der von dem Vermessungsgerät 200 und/oder der Fertigungsmaschine 100 benötigt wird.

Das Bereitstellungsmodul 320 kann beispielsweise als Kommunikationsmodul (z. B. eine Netzwerkschnittstelle) ausgebildet sein. Die Vorrichtung 300 kann beispielsweise eine verteilte Datenbank sein, wie beispielsweise eine Blockkette, eine Peer-to-Peer Datenbank oder ein Cloud-Service. Alternativ oder zusätzlich kann beispielsweise das Bereitstellungsmodul zum Authentisieren eines Empfängers des dreidimensionalen Modells eingerichtet sein, damit insbesondere sichergestellt wird, dass z. B. nur berechtigte Empfänger (z. B. das Fertigungssystem und/oder die Fertigungsmaschine und/oder das Vermessungsgerät) das dreidimensionale Modell empfangen. Hierzu können insbesondere die Empfänger mit der Vorrichtung dafür notwendige (Sicherheits-)Credentials (z. B. kryptographische Schlüssel, digitale Signaturen oder Passwörter) austauschen, die z. B. von der Vorrichtung überprüft werden. Alternativ oder zusätzlich kann beispielsweise das Bereitstellungsmodul einem entsprechenden Empfänger nur die notwendigen Teile der Daten des dreidimensionalen Modells zu übermitteln, die für eine Ausführung der entsprechenden Fertigungsanweisungen oder des Überprüfens notwendig sind. Hierzu können beispielsweise entsprechende empfängerspezifische Profile in einem Konfigurationsspeicher der Vorrichtung gespeichert sein, die z. B. angeben für welchen Empfänger welche Teile der Daten (z. B. Fertigungsreferenzwerte und/oder die Fertigungstoleranzwerte und/oder die Eingreiftoleranzwerte und/oder die Fertigungsanweisungen usw.) des dreidimensionalen Modells übermittelt werden dürfen. Es ist beispielsweise auch denkbar, dass die entsprechenden Empfänge den Umfang der von ihnen benötigten Daten des dreidimensionalen Modells automatisiert übermitteln. Dies kann beispielsweise während der Installation von Empfängern im Fertigungssystem oder während einer Wartung des Fertigungssystem oder wenn das Fertigungssystem in einem Konfigurationsmodus versetzt ist erfolgen. Abhängig von der Implementierung kann das dreidimensionale Modell mit den entsprechenden Daten (Steuerbefehle und/oder Fertigungsreferenzwerte und/oder Fertigungstoleranzwerte und/oder Eingreiftoleranzwerte und/oder Fertigungsanweisungen) beispielsweise von dem Vermessungsgerät 200 und/oder der Fertigungsmaschine 100 und/oder dem Fertigungssystem mittels des Bereitstellungsmoduls 310 abgerufen werden.

Entsprechend können insbesondere auch vorzugsweise nur die Teile des dreidimensionalen Modells mit den entsprechenden Daten von dem Vermessungsgerät 200 und/oder der Fertigungsmaschine 100 und/oder dem Fertigungssystem abgerufen werden, die das jeweilige Vermessungsgerät 200 und/oder die jeweilige Fertigungsmaschine 100 und/oder das jeweilige Fertigungssystem zum Abarbeiten von Fertigungsanweisungen bzw. von Arbeitsvorgängen/Fertigungsschritten notwendig sind.

Beispielsweise wird beim Bohren von einem Loch (also dem Abarbeiten der entsprechenden Fertigungsanweisungen) an einer bestimmten Stelle des zu fertigenden Objektes (das anhand des dreidimensionalen Modells bestimmt bzw. vorgegeben ist), beispielsweise der (räumliche) Bereich mit den zugehörigen Daten des dreidimensionalen Modells an eine entsprechende Fertigungsmaschine (z. B. Fertigungsmaschine 100) übermittelt, der zum Abarbeiten dieses Arbeitsvorgangs/Fertigungsschrittes notwendig ist. Mit anderen Worten wird hierzu beispielsweise von der Vorrichtung für die entsprechenden Empfänger oder Abrufenden ein Teilmodell mit den zugehörigen Daten erzeugt und an die Empfänger und/oder die Abrufenden übermittelt. Die Vorrichtung 300 kann beispielsweise zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor), und eine Ein-/Ausgabeeinheit zum Verbinden von Sensoren und/oder Werkzeugen und/oder Aktoren. Der Prozessor kann beispielsweise mehrere weitere Prozessoren umfassen, die insbesondere zur Realisierung von weiteren Ausführungsbeispielen verwendet werden können. Die genannten Komponenten oder weitere/n Komponente/n können beispielsweise ebenfalls über den Bus 340 miteinander kommunikativ verbunden sein.

Bei dem Prozessor kann es sich beispielsweise um einen ASIC handeln, der anwendungsspezifisch für die Funktionen eines jeweiligen Moduls (oder einer Einheit) oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Die Fertigungsmaschine 100, das Vermessungsgerät 200 und Vorrichtung 300 sind beispielsweise in dem Fertigungssystem aus Fig. 4 über ein Kommunikationsnetzwerk 410 miteinander kommunikativ verbunden sein.

Zusätzlich kann das Fertigungssystem aus Fig. 4 eine weitere Fertigungsmaschine 100a umfassen. Die weitere Fertigungsmaschine 100a umfasst beispielsweise ebenfalls eine weitere Kommunikationsmodul 110a, ein weiteres Berechnungsmodul 120a und ein Fertigungsmodul 130a, die über einen weiteren Bus 140a miteinander verbunden sind. Das weitere Fertigungssystem 100a umfasst zudem einen weiteren Roboter 150a und ein weiteres Werkzeugs 155a.

Je nach Ausgestaltung der Fertigungsmaschine 100 bzw. des Fertigungssystems kann beispielsweise das Vermessungsgerät 200 als separates Vermessungsgerät des Fertigungssystems realisiert sein oder als integrales Vermessungsgerät der Fertigungsmaschine 100 realisiert sein. Es ist beispielsweise auch möglich, dass die Fertigungsmaschine 100 ein weiteres Vermessungsgerät 200 (analog zum bereits genannten Vermessungsgerät) umfasst.

Das Fertigungssystem kann beispielsweise auch mehrere Fertigungsmaschinen 100, 100a umfassen, wobei das Fertigungssystem ein Auswahlmodul umfasst, das anhand des dreidimensionalen Modells und der Fertigungsanweisungen eine geeignete Fertigungsmaschine zum Ausführen der Fertigungsanweisungen auswählt. Zusätzlich oder alternativ können bei der Auswahl die entsprechenden Fertigungsreferenzwerte und/oder die entsprechenden Fertigungstoleranzwerte und/oder die entsprechenden Eingreiftoleranzwerte.
Das Auswahlmodul kann analog zum Berechnungsmodul 120 ein Kommunikationsmodul umfassen, mit der die entsprechend getroffene Auswahl oder die notwendigen Daten um eine Auswahl zutreffen gesendet und/oder empfangen werden. Bei dem Kommunikationsmodul kann es sich beispielsweise um eine Netzwerkschnittstelle handeln (WLAN oder Kabelgebunden).

Insbesondere können auch mehrere Fertigungsmaschinen 100, 100a für die Abarbeitung der Fertigungsanweisungen benötigt werden (z. B. fräst die Fertigungsmaschine 100 Rillen in ein Werkstück und die weitere Fertigungsmaschine 100a poliert die gefrästen Rillen), dabei bestimmt das Auswahlmodul bzw. das Fertigungssystem anhand der Fertigungsanweisungen und/oder des dreidimensionalen Modells die dafür notwenigen Fertigungsmaschinen und steuert ggf. den Fertigungsprozess und die Reihenfolge der Bearbeitung (z. B. die Reihenfolge der Abarbeitung der Fertigungsanweisungen oder die Reihenfolge der Fertigungsmaschinen, die die Fertigungsanweisungen abarbeiten) des zu fertigenden Objektes. Insbesondere kann das Auswahlmodul bzw. das Fertigungssystem anhand der Fertigungsanweisungen und/oder des dreidimensionalen Modells den Fertigungsprozess anhand eines vorgegebenen Kriteriums optimieren. Beispielsweise kann das vorgegebene Kriterium vorgeben, dass die Fertigungszeit minimiert wird, die Fertigungskosten minimiert werden oder die Qualität maximiert wird (also die Abweichungen von den Fertigungsreferenzwerten minimiert werden). Entsprechend des vorgegebenen Kriteriums wählt z. B. das Auswahlmodul bzw. das Fertigungssystem entsprechende Fertigungsmaschinen, die das vorgegebene Kriterium für den Produktions- bzw. Fertigungsprozess für das zu fertigende Objekt einhalten.

Für die Auswahl der notwendigen Fertigungsmaschinen kann das Fertigungssystem beispielsweise eine Fertigungsmaschinendatenbank umfassen, mittels der die verfügbaren Fertigungsmaschinen verwaltet werden können. Die Fertigungsmaschinendatenbank kann beispielsweise Fertigungsmaschineneigenschaften bereitstellen, die für eine Fertigungsmaschinenauswahl notwendig ist. Die Fertigungsmaschineneigenschaften können dabei beispielsweise sein, wie stark die Abweichungen von Fertigungsreferenzwert einer entsprechenden Fertigungsmaschinen ist, wenn durch eine entsprechende Fertigungsmaschine ein Werkstück bearbeitet wird. Zusätzlich oder alternativ können beispielsweise Verwendungskosten, Energieverbrauch oder eine Bearbeitungsgeschwindigkeit der entsprechenden Fertigungsmaschine in den Fertigungsmaschineneigenschaften gespeichert bzw. von diesen umfasst sein. Diese Fertigungsmaschineneigenschaften können beispielsweise bei einer Optimierung der Fertigungsanweisungen bzw. des Fertigungsprozesses des zu fertigendes Objektes berücksichtigt werden. Zusätzlich können die Fertigungsmaschineneigenschaften auch eine Adresse und/oder UID einer entsprechenden Fertigungsmaschine umfassen, die z. B. verwendet werden können um mit einer entsprechenden Fertigungsmaschine zu kommunizieren. Mittels dieser Adresse können beispielsweise das dreidimensionale Modell und die zugehörigen Daten an die ausgewählten Fertigungsmaschinen übermittelt werden.

Hierzu können entsprechende Fertigungsmaschinen sich über ein Netzwerkprotokoll bei der Fertigungsmaschinendatenbank registrieren. Dies wird vorzugsweise automatisiert durchgeführt, indem die entsprechenden Fertigungsmaschinen ihre jeweiligen Fertigungsmaschineneigenschaften in einem Speichermodul speichern und an die Fertigungsmaschinendatenbank übermitteln (z. B. zu vorgegenen Zeitpunkten, intervallgesteuert, beim Einschalten einer Fertigungsmaschinen oder bei einer Änderung von Fertigungsmaschineneigenschaften einer jeweiligen Fertigungsmaschine). Die Fertigungsmaschineneigenschaften können beispielsweise auch der Wert/Grad der Abweichungen von den entsprechenden Fertigungsreferenzwerten (und/oder den entsprechenden Fertigungstoleranzwerten und/oder den entsprechenden Eingreiftoleranzwerten) und/oder die absoluten Messwerte und/oder die relativen Messwerte und/oder die absoluten Abweichungen von den Fertigungsreferenzwerten (und/oder den entsprechenden Fertigungstoleranzwerten und/oder den entsprechenden Eingreiftoleranzwerten) und/oder die relativen Abweichungen von den Fertigungsreferenzwerten (und/oder den entsprechenden Fertigungstoleranzwerten und/oder den entsprechenden Eingreiftoleranzwerten) umfassen. Dies kann auch entsprechende Abweichungen für Werkzeuge einer jeweiligen Fertigungsmaschine umfassen. Alternativ oder zusätzlich können die Fertigungsmaschineneigenschaften auch weitere Informationen umfassen, die beispielsweise die Anzahl der fehlerhaften gefertigten Objekte innerhalb einer vorgegebenen Zeitraums angeben (z. B. innerhalb eine Monats) oder die Anzahl der fehlerhaft gefertigten Objekte gegenüber der akzeptieren/nicht fehlerhalft gefertigten Objekten angibt (z. B. im Mittel wird bei 100 gefertigten Objekten ein fehlerhaft gefertigtes Objekt hergestellt).

Insbesondere gelten die hier genannten Erläuterungen für das Auswahlmodul für Fertigungsmaschinen und/oder die Fertigungsmaschinendatenbank analog für ein Auswahlmodul für Vermessungsgeräte und/oder für eine Vermessungsgerätedatenbank. Vermessungsgeräteigenschaften können dabei ebenfalls eine Adresse und/oder eine UID und/oder Angeben zu den Sensoren (z. B. Typ der Sensoren wie Oberflächenscanner, 3D-Kamera etc) und/oder Angaben zur Genauigkeit der Sensoren umfassen.

In der Variante in der das Berechnungsmodul 120 beispielsweise als ein separates Berechnungsmodul des Fertigungssystems ausbildet ist, kann das Auswahlmodul ein integrales Modul des Berechnungsmodules sein oder das Berechnungsmodul 120 ist ein integrales Modul des Auswahlmoduls.

In einer weiteren Variante umfasst die Vorrichtung 300 das Auswahlmodul.

In der Variante in der das Berechnungsmodul 120 beispielsweise von der Vorrichtung 300 umfasst ist, kann das Auswahlmodul ein integrales Modul des Berechnungsmodules 120 sein oder das Berechnungsmodul 120 ist ein integrales Modul des Auswahlmoduls.

Das Berechnungsmodul 120 berechnet beispielsweise spezifisch für eine entsprechende Fertigungsmaschinen (z. B. die Fertigungsmaschinen 100) oder eine bestimmte Klasse von Fertigungsmaschinen (wie z. B. Bohrmaschinen, Fräsmaschinen etc.) die Steuerbefehle und steuert das Auswahlmodul entsprechend an, damit die entsprechend geeignete Fertigungsmaschine (also die Fertigungsmaschine für die die Steuerbefehle berechnet wurden) durch das Auswahlmodul ausgewählt wird. Alternativ kann das Auswahlmodul anhand der berechneten Steuerbefehle oder anhand der Fertigungsanweisungen und/oder des dreidimensionalen Modells eine entsprechende Fertigungsmaschine auswählen. Die entsprechende Auswahl wird dann dem Berechnungsmodul 120 übermittelt und das Berechnungsmodul 120 kann dann die Steuerbefehle berechnen.

Die Vorrichtung 300 aus Fig. 4 ist insbesondere als verteiltes Datenbanksystem realisiert, dessen einzelne Knoten oder Speichermodule (z. B. das Speichermodul 320, ein erstes Speichermodul 320a und ein zweites Speichermodul 320b) über ein weiteres Kommunikationsnetzwerk 350 miteinander verbunden sind. Die einzelnen Knoten oder die einzelnen Speichermodule speichern dann vorzugsweise jeweils vollständig oder teilweise das dreidimensionale Modell. Das verteilte Datenbanksystem speichert vorzugsweise vollständig das dreidimensionale Modell.

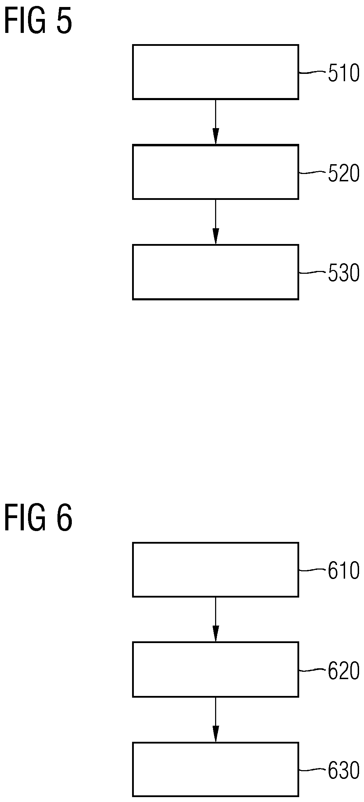

Die Fig. 5 zeigt ein weiteres Ausführungsbeispiel der Erfindung.

Im Einzelnen zeigt die Fig. 5 ein Ablaufdiagramm der Erfindung, wobei die Erfindung als ein rechnergestütztes Verfahren implementiert wird.

Im Einzelnen wird in diesem Ausführungsbeispiel ein Verfahren zum rechnergestützten Fertigen eines Objektes mittels einer Fertigungsmaschine gezeigt.

Das Verfahren umfasst einen ersten Verfahrensschritt 510 zum Empfangen eines dreidimensionalen Modells und/oder von Steuerbefehlen, wobei das dreidimensionale Modell Fertigungsanweisungen für die Fertigungsmaschine umfasst.

Das Verfahren umfasst einen zweiten Verfahrensschritt 520 zum Berechnen von Steuerbefehlen mittels des dreidimensionalen Modells und der Fertigungsanweisungen.

Abhängig von der gewählten Implementierungsvariante ist der zweite Verfahrensschritt optional.

Das Verfahren umfasst einen dritten Verfahrensschritt 530 zum fertigen eines zu dem dreidimensionalen Modell korrespondierenden Objektes, wobei mittels des dreidimensionalen Modells, der Fertigungsanweisungen und der Steuerbefehle die Fertigungsmaschine derart konfiguriert wird, dass das Objekt gefertigt wird.

Die Fig. 6 zeigt ein weiteres Ausführungsbeispiel der Erfindung.

Im Einzelnen zeigt die Fig. 6 ein Ablaufdiagramm der Erfindung, wobei die Erfindung als ein rechnergestütztes Verfahren implementiert wird.

Im Einzelnen wird in diesem Ausführungsbeispiel ein Verfahren zum rechnergestützten Überprüfen eines mittels einer Fertigungsmaschine gefertigten Objektes und/oder einer Fertigungsmaschine dargestellt.

Das Verfahren umfasst einen ersten Verfahrensschritt 610 zum Empfangen eines dreidimensionalen Modells, wobei das dreidimensionale Modell Fertigungsanweisungen umfasst und den jeweiligen Fertigungsanweisungen Fertigungsreferenzwerte und/oder Fertigungstoleranzwerte und/oder Eingreiftoleranzwerte zugeordnet sind.

Das Verfahren umfasst einen zweiten Verfahrensschritt 620 zum Erfassen von Messwerten, wobei die Messwerte mittels Sensoren für das gefertigte Objekt erfasst werden. Dabei ist das Objekt anhand des dreidimensionalen Modells und der Fertigungsanweisungen gefertigt worden (z. B. durch die Fertigungsmaschine aus Fig. 1 und/oder Fig. 4). Die Messwerte werden dabei jeweils für die Fertigungsreferenzwerte und/oder die Fertigungstoleranzwerte und/oder die Eingreiftoleranzwerte erfasst.

Das Verfahren umfasst einen dritten Verfahrensschritt 630 zum Überprüfen der Messwerte, wobei die Messwerte mit den Referenzwerten abgeglichen werden. Wird dabei eine Abweichung der Messwerte von den entsprechenden Fertigungsreferenzwerten und bei einer Überschreitung der zugehörigen Fertigungstoleranzwerten und/oder der zugehörigen Eingreiftoleranzwerten festgestellt, wird ein Steuersignal bereitgestellt bzw. generiert. Unter einem Abgleichen ist insbesondere zu verstehen, dass die Messwerte mit den entsprechenden Fertigungsreferenzwerten und/oder den entsprechenden Fertigungstoleranzwerten und/oder den entsprechenden Eingreiftoleranzwerten verglichen werden bzw. überprüft wird, ob die Messwerte die entsprechenden Fertigungsreferenzwerte und/oder die entsprechenden Fertigungstoleranzwerte und/oder die entsprechenden Eingreiftoleranzwerte einhalten. Insbesondere wird dieses Abgleichen für einen Messwert und den dazu korrespondierenden Fertigungsreferenzwerten unter Berücksichtigung der entsprechenden Fertigungstoleranzwerte und/oder der entsprechenden Eingreiftoleranzwerte durchgeführt.

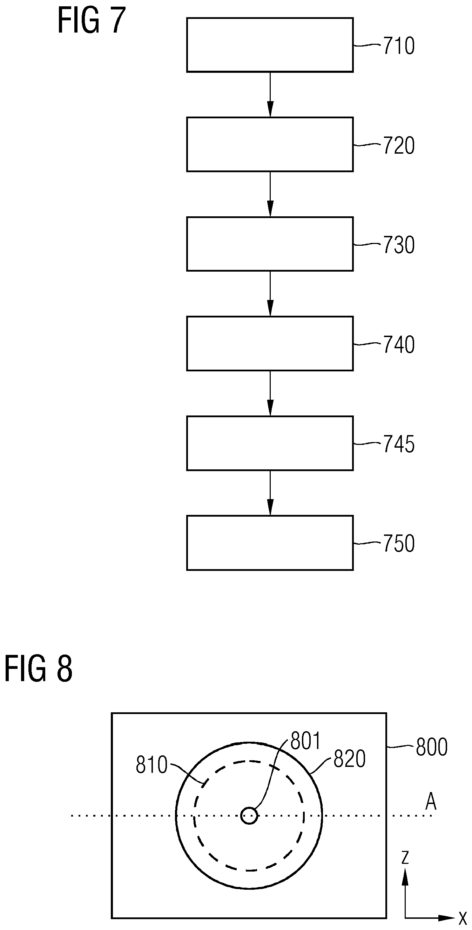

Die Fig. 7 zeigt ein weiteres Ausführungsbeispiel der Erfindung.

Im Einzelnen zeigt die Fig. 7 ein Ablaufdiagramm der Erfindung, wobei die Erfindung als ein rechnergestütztes Verfahren implementiert wird.

Im Einzelnen wird in diesem Ausführungsbeispiel ein Verfahren zum rechnergestützten Fertigen eines Objektes mittels einer Fertigungsmaschine dargestellt, wobei die Fertigung (bzw. der Fertigungsprozess) des Objektes überwacht bzw. überprüft wird.

Das Verfahren umfasst einen ersten Verfahrensschritt 710 zum Empfangen eines dreidimensionalen Modells und/oder von Steuerbefehlen, wobei das dreidimensionale Modell Fertigungsanweisungen umfasst. Dabei sind den jeweiligen Fertigungsanweisungen Fertigungsreferenzwerte und/oder Fertigungstoleranzwerte und/oder Eingreiftoleranzwerte zugeordnet.

Das Verfahren umfasst einen zweiten Verfahrensschritt 720 zum Berechnen von Steuerbefehlen mittels des dreidimensionalen Modells und der Fertigungsanweisungen.

Abhängig von der gewählten Implementierungsvariante ist der zweite Verfahrensschritt optional.

Das Verfahren umfasst einen dritten Verfahrensschritt 730 zum fertigen eines zu dem dreidimensionalen Modell korrespondierenden Objektes, wobei mittels des dreidimensionalen Modells, der Fertigungsanweisungen und der Steuerbefehle die Fertigungsmaschine derart konfiguriert wird, dass das Objekt gefertigt wird.

Die Verfahrensschritte eins bis drei können beispielsweise von einer Fertigungsmaschine realisiert werden, so wie dies insbesondere in den Fig. 1 - 4 erläutert wurde.

Das Verfahren umfasst einen vierten Verfahrensschritt 745 zum Erfassen von Messwerten, wobei die Messwerte mittels Sensoren für das gefertigte Objekt erfasst werden. Dabei ist das Objekt anhand des dreidimensionalen Modells und der Fertigungsanweisungen gefertigt worden (z. B. durch die Fertigungsmaschine aus Fig. 1 und/oder Fig. 4). Die Messwerte werden dabei jeweils für die Fertigungsreferenzwerte und/oder die Fertigungstoleranzwerte und/oder die Eingreiftoleranzwerte erfasst.

Das Verfahren umfasst einen fünften Verfahrensschritt 750 zum Überprüfen der Messwerte, wobei die Messwerte mit den Referenzwerten abgeglichen werden. Wird dabei eine Abweichung der Messwerte von den entsprechenden Fertigungsreferenzwerten und bei einer Überschreitung der zugehörigen Fertigungstoleranzwerten und/oder der zugehörigen Eingreiftoleranzwerten festgestellt, wird ein Steuersignal bereitgestellt bzw. generiert.

Der vierte und der fünfte Verfahrensschritt können beispielsweise von einem Vermessungsgerät realisiert werden, so wie dies insbesondere in den Fig. 1 - 4 gezeigt ist.

Hierzu kann das Verfahren einen optionalen Verfahrensschritt 740 zum Empfangen eines dreidimensionales Modells umfassen, wobei das dreidimensionale Modell Fertigungsanweisungen umfasst und den jeweiligen Fertigungsanweisungen die entsprechenden Fertigungsreferenzwerte und/oder Fertigungstoleranzwerte und/oder Eingreiftoleranzwerte zugeordnet sind. Dieser optionale Verfahrensschritt kann ebenfalls durch das Vermessungsgerät realisiert werden.

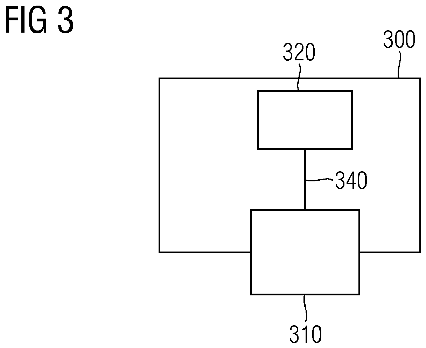

Das Übermitteln des dreidimensionalen Modells an das Vermessungsgerät kann beispielsweise durch die Fertigungsmaschine (z. B. die Fertigungsmaschine 100 aus Fig. 1 und/oder Fig. 4) und/oder durch die Vorrichtung 300 aus Fig. 3 und/oder 4 erfolgen. Dies gilt insbesondere auch für die anderen gezeigten Ausführungsbeispiele.

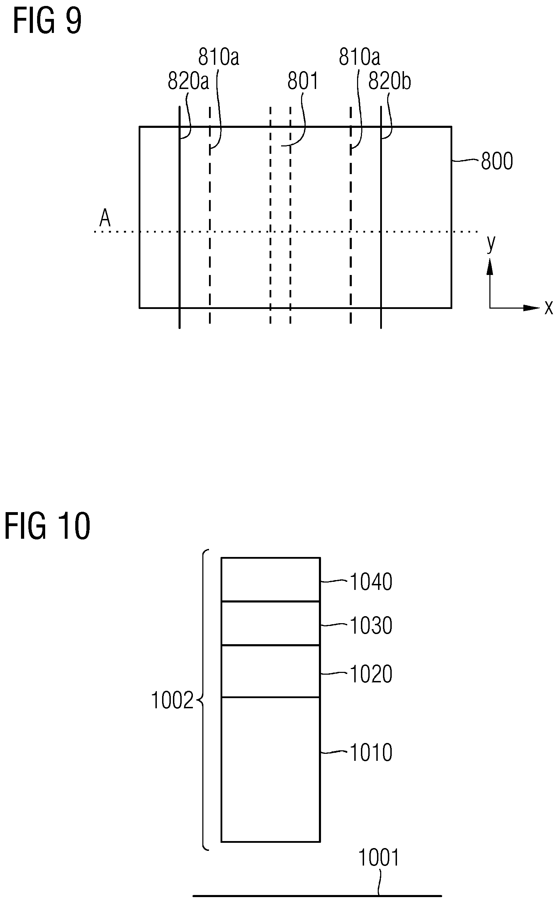

Die Fig. 8 und 9 zeigen ein weiteres Ausführungsbeispiel der Erfindung.

Im Einzelnen ist in Fig. 8 und Fig. 9 ein Ausschnitt 800 aus dem dreidimensionalen Modell dargestellt. Der Ausschnitt 800 zeigt eine digitale Abbildung einer Bohrung, die in ein Objekt/Werkstück mittels eines Werkzeuges (z. B. einen Bohrer) gebohrt werden soll. Die Bohrung wird mittels der Fertigungsreferenzwerte 801 des dreidimensionalen Modells vorgegeben. Der gezeigte Ausschnitt kann beispielsweise ein Teilmodell des dreidimensionalen Modells sein.

In Fig. 8 sind zudem die entsprechenden Eingreiftoleranzwerte 810 und die entsprechenden Fertigungstoleranzwerte 820 gezeigt. Die Fig. 8 zeigt den Ausschnitt 800 in der XZ-Ebene. Schneidet man z. B. entlang der Schnittlinie A den Ausschnitt 800, erhält man eine Darstellung in der XY, die beispielsweise in Fig. 9 dargestellt ist. Dabei kann beispielsweise die Beziehung dieser Werte zueinander wie folgt definiert werden:
|F(Eingreiftoleranzwerte)| <
|F(Fertigungstoleranzwerte) |

Wobei F eine Funktion zum bestimmen der Abweichung der Messwerte von den Fertigungsreferenzwerten ist.

In der Fig. 9 sind die Eingreiftoleranzwerte entlang der Schnittlinie A aus Fig. 8 in der XY-Ebene gezeigt. Anhand der gewählten Darstellung teilen sich die Eingreiftoleranzwerte 810 in links von den Fertigungsreferenzwerten liegende linke Eingreiftoleranzwerte 810a und in rechts von den Fertigungsreferenzwerten liegende rechte Eingreiftoleranzwerte 810b auf.

Analog dazu teilen sich die Fertigungstoleranzwerte 820 in links von den Fertigungsreferenzwerten liegende linke Fertigungstoleranzwerte 820a und in rechts von den Fertigungsreferenzwerten liegende rechte Fertigungstoleranzwerte 820b auf.

Das dreidimensionale Modell kann hierbei auf unterschiedliche Weise realisiert werden, es kann beispielsweise durch Punkte im dreidimensionalen Raum festlegt sein (z. B. durch X, Y, Z Koordinaten). Alternativ kann das dreidimensionale Modell mit Polygonen oder Voxeln definiert werden, wobei das dreidimensionale Modell die notwendigen Koordinaten und/oder Funktionen speichert zum festlegen bzw. definieren des dreidimensionalen Modells umfasst bzw. speichert. Das dreidimensionale Modell gibt dabei die (dreidimensionale) geometrische Struktur des zu fertigenden Objektes vor, in dem entsprechende zu fertigende (dreidimensionale) (Teil)Strukturen des dreidimensionalen Modells durch eine oder mehrere Fertigungsmaschinen für ein Werkstück bzw. ein zu fertigendes Objekt hergestellt werden (z. B. durch Oberflächenbearbeitungen etc.). Die Fertigungsreferenzwerte können dabei die entsprechenden Kanten und/oder Oberflächen des dreidimensionalen Modells sein, die durch die entsprechenden Punkte im dreidimensionalen Raum, durch entsprechende Polygone oder durch entsprechende Voxel und der entsprechenden Koordinaten (z. B. X, Y, Z Koordinaten) festlegt sind. Dabei können durch die entsprechenden Koordinaten beispielsweise die Fertigungsreferenzwerte vorgegeben bzw. festlegt sein.

Mit anderen Worten ist das dreidimensionale Modell eine virtuelle Abbildung des zu fertigenden Objektes, wobei anhand des dreidimensionalen Modells die zu fertigenden Strukturen für das Werkstück bzw. das zu fertigende Objekt festlegt sind. Diese zu fertigenden Strukturen für das Werkstück bzw. das zu fertigende Objekt werden dann vorzugsweise durch die Fertigungsmaschinen hergestellt und der Herstellprozess mittels des Vermessungsgerätes überprüft bzw. überwacht.

Die Fig. 10 zeigt exemplarisch, wie Fertigungsanweisungen 1002 einer zu fertigenden Struktur 1001 (also insbesondere eine digitale/virtuelle dreidimensionale Abbildung dieser Struktur durch das dreidimensionale Modell) zugeordnet sein können. Ein erster Speicherbereich 1010 kann erste Fertigungsanweisungen und/oder erste Fertigungsreferenzwerte und/oder erste Fertigungstoleranzwerte und/oder erste Eingreiftoleranzwerte speichern (damit eine entsprechende Zuordnung realisiert wird). Diese ersten Werte/Fertigungsanweisungen sind dann beispielsweise für einen ersten Verarbeitungsschritt oder Bearbeitungsvorgang (z. B. die Oberfläche des Werkstückes abschleifen) eines Werkstückes durch eine erste Fertigungsmaschine relevant und werden z. B. beim Berechnen von Steuerbefehlen für die entsprechende Fertigungsmaschine entsprechend berücksichtigt (z. B. es werden nur Steuerbefehle für die entsprechende Fertigungsmaschine berechnet und nur diese Steuerbefehle, die diese Fertigungsmaschine betreffen, werden an diese Fertigungsmaschine übermittelt). Je nach Implementierungsvariante können dabei die ersten Fertigungsanweisungen auch die ersten Fertigungsreferenzwerte und/oder die ersten Fertigungstoleranzwerte und/oder die ersten Eingreiftoleranzwerte umfassen bzw. speichern.

Dabei können in einem zweiten Speicherbereich 1020, in einem dritten Speicherbereich 1030 und in einem vierten Speicherbereich 1040 jeweils weitere Verarbeitungsschritte oder Bearbeitungsvorgänge vorgegeben sein. Durch die hierdurch vorgegebene Reihenfolge der einzelnen Speicherbereiche bzw. Fertigungsanweisungen kann beispielsweise auch eine Reihenfolge für die abzuarbeitenden Fertigungsanweisungen vorgegeben werden. Hierdurch können insbesondere unsinnige oder das Werkstück zerstörende Reihenfolgen bei der Abarbeitung der Fertigungsanweisungen unterbunden werden. Beispielsweise wäre ein Lackieren eines Werkstückes als erster Bearbeitungsvorgang unsinnig, wenn in einem zweiten Bearbeitungsvorgang das Werkstück abgeschliffen wird.

Diese Anordnung der Speicherbereiche kann auch als vertikale funktionale Aufteilung der Fertigungsanweisungen bezeichnet werden. Da insbesondere durch die Positionen bzw. Adressen eines entsprechenden Speicherbereiches eine Verkettung über die Adressen eines jeweiligen Speicherbereiches realisiert werden kann. Auf diese Weise können die Fertigungsanweisungen mit ihren Speicherbeichen beispielsweise als verkettete Listen oder verkettete Blöcke realisiert sein.

Die Erfindung betrifft also ein System, eine Vorrichtung, eine Fertigungsmaschine, ein Vermessungsgerät und Verfahren zum Fertigen eines Produktes. Mit der Erfindung kann eine Fertigungsanlage mittels eines dreidimensionalen Datenmodells, das zudem Fertigungsanweisungen umfasst, stärker automatisiert werden, als dies bisher mit konventionellen Automatisierungsnetzwerken möglich ist.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Fertigungssystem umfassend:
- eine Fertigungsmaschine aufweisend
- ein erstes Kommunikationsmodul zum Empfangen eines dreidimensionales Modells und/oder von Steuerbefehlen, wobei
- das dreidimensionale Modell Fertigungsanweisungen für die Fertigungsmaschine umfasst;
- den jeweiligen Fertigungsanweisungen Fertigungsreferenzwerte und/oder Fertigungstoleranzwerte und/oder Eingreiftoleranzwerte zugeordnet sind;
- ein Fertigungsmodul, wobei mittels des dreidimensionalen Modells, der Fertigungsanweisungen und der Steuerbefehle die Fertigungsmaschine derart konfiguriert wird, dass ein zu dem dreidimensionalen Modell korrespondierendes Objekt gefertigt wird;
- ein Berechnungsmodul, wobei das Berechnungsmodul mittels des dreidimensionalen Modells und der Fertigungsanweisungen die Steuerbefehle berechnet;
- Vermessungsgerät aufweisen
- ein zweites Kommunikationsmodul zum Empfangen des dreidimensionales Modells;
- ein Erfassungsmodul, wobei
- das Erfassungsmodul mittels Sensoren Messwerte für das gefertigte Objekt erfasst,
- die Messwerte jeweils für die Fertigungsreferenzwerte und/oder die Fertigungstoleranzwerte und/oder Eingreiftoleranzwerte erfasst werden;
- ein Überprüfungsmodul, wobei
- einer Abweichung der Messwerte von den entsprechenden Fertigungsreferenzwerten und bei einer Überschreitung der zugehörigen Fertigungstoleranzwerten und/oder der zugehörigen Eingreiftoleranzwerten ein Steuersignal bereitgestellt wird.

2. Fertigungssystem nach Anspruch 1, wobei
- mittels des Steuersignals bei einem Überschreiten von einem der entsprechenden Fertigungstoleranzwerte ein Verwerfen des zu fertigenden Objektes gesteuert wird, oder
- mittels des Steuersignals bei einem Überschreiten von einem der entsprechenden Fertigungstoleranzwerte ein Nacharbeiten des zu fertigenden Objektes gesteuert wird oder
- mittels des Steuersignals bei einem Überschreiten von einem der entsprechenden Fertigungstoleranzwerte eine Herstellung eines Ersatzes für das zu fertigende Objekt gesteuert wird.

3. Fertigungssystem nach einem der vorhergehenden Ansprüche, wobei
- mittels des Steuersignals bei einem Überschreiten von einem der entsprechenden Fertigungstoleranzwerte und/oder der entsprechenden Eingreiftoleranzwerten eine Neukalibrierung des Vermessungsgerätes und/oder der Fertigungsmaschine gesteuert wird, und/oder
- mittels des Steuersignals bei einem Überschreiten von einem der entsprechenden Fertigungstoleranzwerte und/oder der entsprechenden Eingreiftoleranzwerten ein erneutes Erfassen und Überprüfen der entsprechenden Messwerte gesteuert wird, und/oder
- mittels des mittels des Steuersignals bei einem Überschreiten von einem der entsprechenden Fertigungstoleranzwerte und/oder der entsprechenden Eingreiftoleranzwerten ein Austauschen eines Werkzeuges gesteuert wird.

4. Fertigungssystem nach einem der vorhergehenden Ansprüche, wobei die Fertigungsanweisungen vorgegebenen Oberflächen des dreidimensionalen Modells zugeordnet sind.

5. Fertigungssystem nach einem der vorhergehenden Ansprüche, wobei
- mittels der Steuerbefehle und/oder der Fertigungsanweisungen eine Auswahl eines oder mehrerer Werkzeuge erfolgt,
- insbesondere für die vorgegebenen Oberflächen des dreidimensionalen Modells voneinander verschiedene Werkzeuge ausgewählt werden.

6. Fertigungssystem nach einem der vorhergehenden Ansprüche, wobei
- mittels der Steuerbefehle und/oder der Fertigungsanweisungen unter Berücksichtigung eines Standortes des Fertigungsmaschine eine Auswahl eines oder mehrerer Werkzeuge durch die Fertigungsmaschine erfolgt,
- insbesondere für die vorgegebenen Oberflächen des dreidimensionalen Modells voneinander verschiedene Werkzeuge ausgewählt werden.

7. Fertigungssystem nach einem der vorhergehenden Ansprüche, insbesondere der Ansprüche 5 oder 6, wobei die Auswahl eines entsprechenden Werkzeuges anhand der zugehörigen Fertigungsreferenzwerte und/oder der Fertigungstoleranzwerte und/oder der Eingreiftoleranzwerte erfolgt .

8. Fertigungssystem nach einem der vorhergehenden Ansprüche, wobei das dreidimensionale Modell von einer Bereitstellungsvorrichtung an das Fertigungssystem und/oder die Fertigungsmaschine und/oder das Messgerät übermittelt wird.

9. Fertigungssystem nach einem der vorhergehenden Ansprüche, wobei die Fertigungsanweisungen notwendige Voraussetzungen für nachfolgende Fertigungsanweisungen umfassen.

10. Fertigungssystem nach einem der vorhergehenden Ansprüche, wobei die Fertigungsanweisungen und das dreidimensionale Modell zu fertigende Strukturen für das zu fertigende Objekt vorgeben.

11. Fertigungssystem nach einem der vorhergehenden Ansprüche, wobei die Auswahl eines entsprechenden Werkzeuges abhängig von den zugehörigen Fertigungsreferenzwerte und/oder den Fertigungstoleranzwerte und/oder den Eingreiftoleranzwerte optimiert wird.

12. Vorrichtung aufweisend:
- ein Bereitstellungsmodul zum Bereitstellen eines dreidimensionales Modells, wobei
- das dreidimensionale Modell Fertigungsanweisungen für eine Fertigungsmaschine umfasst,
- mittels des dreidimensionalen Modells und der Fertigungsanweisungen Steuerbefehle durch die Fertigungsmaschine berechnet werden;
- mittels des dreidimensionalen Modells, der Fertigungsanweisungen und der Steuerbefehle die Fertigungsmaschine derart konfiguriert wird, dass ein zu dem dreidimensionalen Modell korrespondierendes Objekt gefertigt wird.

13. Vorrichtung nach Anspruch 12, wobei
- den jeweiligen Fertigungsanweisungen Fertigungsreferenzwerte und/oder Fertigungstoleranzwerte und/oder Eingreiftoleranzwerte zugeordnet sind,
- insbesondere die Eingreiftoleranzwerte eine geringere Abweichung von Fertigungsreferenzwerten zulässt als die Fertigungstoleranzwerte.

14. Vorrichtung nach Anspruch 12 oder 13, wobei
- Messwerte für das zu fertigende Objekt durch ein Vermessungsgerät erfasst werden,
- mittels der Fertigungsreferenzwerte und/oder der Fertigungstoleranzwerte und/oder Eingreiftoleranzwerte das Vermessungsgerät derart konfiguriert wird, dass bei einer Abweichung von Messwerten von den entsprechenden Fertigungstoleranzwerten und bei einer Überschreitung der zugehörigen Fertigungstoleranzwerten und/oder der zugehörigen Eingreiftoleranzwerten ein Steuersignal bereitgestellt wird.

15. Vorrichtung nach einem der vorhergehenden Ansprüche, wobei die Fertigungsanweisungen notwendige Voraussetzungen für nachfolgende Fertigungsanweisungen berücksichtigen.

16. Fertigungsmaschine umfassend
- ein erstes Kommunikationsmodul zum Empfangen eines dreidimensionales Modells und/oder von Steuerbefehlen, wobei das dreidimensionale Modell Fertigungsanweisungen für die Fertigungsmaschine umfasst;
- ein Fertigungsmodul, wobei mittels des dreidimensionalen Modells, der Fertigungsanweisungen und der Steuerbefehle die Fertigungsmaschine derart konfiguriert wird, dass ein zu dem dreidimensionalen Modell korrespondierendes Objekt gefertigt wird.

17. Vermessungsgerät umfassend:
- ein zweites Kommunikationsmodul zum Empfangen eines dreidimensionales Modells, wobei
- das dreidimensionale Modell Fertigungsanweisungen umfasst,
- den jeweiligen Fertigungsanweisungen Fertigungsreferenzwerte und/oder Fertigungstoleranzwerte und/oder Eingreiftoleranzwerte zugeordnet sind;
- ein Erfassungsmodul, wobei
- das Erfassungsmodul mittels Sensoren Messwerte für ein gefertigtes Objekt erfasst,
- das Objekt anhand des dreidimensionale Modells und der Fertigungsanweisungen gefertigt ist,
- die Messwerte jeweils für die Fertigungsreferenzwerte und/oder die Fertigungstoleranzwerte und/oder Eingreiftoleranzwerte erfasst werden;
- ein Überprüfungsmodul, wobei
- einer Abweichung der Messwerte von den entsprechenden Fertigungsreferenzwerte und bei einer Überschreitung der zugehörigen Fertigungstoleranzwerten und/oder der zugehörigen Eingreiftoleranzwerten ein Steuersignal bereitgestellt wird;

18. Verfahren zum rechnergestützten Fertigen eines Objektes mittels einer Fertigungsmaschine mit folgenden Verfahrensschritten
- Empfangen eines dreidimensionales Modells und/oder von Steuerbefehlen, wobei das dreidimensionale Modell Fertigungsanweisungen für die Fertigungsmaschine umfasst;
- Fertigen eines zu dem dreidimensionalen Modell korrespondierendes Objektes, wobei mittels des dreidimensionalen Modells, der Fertigungsanweisungen und der Steuerbefehle die Fertigungsmaschine derart konfiguriert wird, dass das Objekt gefertigt wird.

19. Verfahren zum rechnergestützten Überprüfen eines mittels einer Fertigungsmaschine gefertigten Objektes und/oder einer Fertigungsmaschine mit folgenden Verfahrensschritten:
- Empfangen eines dreidimensionales Modells, wobei
- das dreidimensionale Modell Fertigungsanweisungen umfasst,
- den jeweiligen Fertigungsanweisungen Fertigungsreferenzwerte und/oder Fertigungstoleranzwerte und/oder Eingreiftoleranzwerte zugeordnet sind;
- Erfassen von Messwerten, wobei
- die Messwerte mittels Sensoren für das gefertigte Objekt erfasst werden,
- das Objekt anhand des dreidimensionale Modells und der Fertigungsanweisungen gefertigt ist,
- die Messwerte jeweils für die Fertigungsreferenzwerte und/oder die Fertigungstoleranzwerte und/oder die Eingreiftoleranzwerte erfasst werden;
- Überprüfen der Messwerte, wobei
- die Messwerte mit den Referenzwerten abgeglichen werden,
- einer Abweichung der Messwerte von den entsprechenden Fertigungsreferenzwerten und bei einer Überschreitung der zugehörigen Fertigungstoleranzwerten und/oder der zugehörigen Eingreiftoleranzwerten ein Steuersignal bereitgestellt wird.

20. Verfahren zum rechnergestützten Fertigen eines Objektes mittels einer Fertigungsmaschine mit folgenden Verfahrensschritten:
- Empfangen eines dreidimensionales Modells und/oder von Steuerbefehlen, wobei
- das dreidimensionale Modell Fertigungsanweisungen umfasst,
- den jeweiligen Fertigungsanweisungen Fertigungsreferenzwerte und/oder Fertigungstoleranzwerte und/oder Eingreiftoleranzwerte zugeordnet sind;
- Fertigen eines zu dem dreidimensionalen Modell korrespondierendes Objektes, wobei mittels des dreidimensionalen Modells, der Fertigungsanweisungen und der Steuerbefehle die Fertigungsmaschine derart konfiguriert wird, dass Objekt gefertigt wird.
- Erfassen von Messwerten, wobei
- die Messwerte mittels Sensoren für das gefertigtes Objekt erfasst werden,
- die Messwerte jeweils für die Fertigungsreferenzwerte und/oder die Fertigungstoleranzwerte und/oder die Eingreiftoleranzwerte erfasst werden;
- Überprüfen der Messwerte, wobei
- einer Abweichung der Messwerte von den entsprechenden Fertigungsreferenzwerten und bei einer Überschreitung der zugehörigen Fertigungstoleranzwerten und/oder der zugehörigen Eingreiftoleranzwerten ein Steuersignal bereitgestellt wird.

21. Computerprogrammprodukt mit Programmbefehlen zur Durchführung der Verfahren nach einem der Ansprüche 18-20.

22. Computerprogrammprodukt mit Programmbefehlen für ein Erstellungsgerät, das mittels der Programmbefehle konfiguriert wird, um die Vorrichtung nach einem der Ansprüche 12-15 und/oder die Fertigungsmaschine nach Anspruch 16 und/oder das Vermessungsgerät nach Anspruch 17 und/oder das Fertigungssystem nach einem der Ansprüche 1-11 zu erstellen.

23. Bereitstellungsvorrichtung für das Computerprogrammprodukt nach Anspruch 21 und/oder 22, wobei die Bereitstellungsvorrichtung das Computerprogrammprodukt speichert und/oder bereitstellt.

## Geänderte Patentansprüche

### Geänderte Patentansprüche gemäss Regel 137(2) EPÜ.

1. Fertigungssystem umfassend:
- eine Fertigungsmaschine (100) aufweisend
- ein erstes Kommunikationsmodul (110) zum Empfangen eines dreidimensionalen Modells und/oder von Steuerbefehlen, wobei
- das dreidimensionale Modell Fertigungsanweisungen für die Fertigungsmaschine (100) umfasst;
- den jeweiligen Fertigungsanweisungen Fertigungsreferenzwerte, Fertigungstoleranzwerte und Eingreiftoleranzwerte zugeordnet sind, und wobei
- für die Eingreiftoleranzwerte geringere Abweichungen von den Fertigungsreferenzwerten erlaubt sind als bei den Fertigungstoleranzwerten;
- ein Fertigungsmodul (130), wobei mittels des dreidimensionalen Modells, der Fertigungsanweisungen und der Steuerbefehle die Fertigungsmaschine derart konfiguriert wird, dass ein zu dem dreidimensionalen Modell korrespondierendes Objekt gefertigt wird;
- ein Berechnungsmodul (120), wobei das Berechnungsmodul mittels des dreidimensionalen Modells und der Fertigungsanweisungen die Steuerbefehle berechnet; und
- ein Vermessungsgerät aufweisend
- ein zweites Kommunikationsmodul (210) zum Empfangen des dreidimensionalen Modells;
- ein Erfassungsmodul (220), wobei
- das Erfassungsmodul (220) mittels Sensoren Messwerte für das gefertigte Objekt erfasst,
- die Messwerte jeweils für die Fertigungsreferenzwerte, die Fertigungstoleranzwerte und die Eingreiftoleranzwerte erfasst werden;
- ein Überprüfungsmodul (230), wobei
- einer Abweichung der Messwerte von den entsprechenden Fertigungsreferenzwerten und bei einer Überschreitung der zugehörigen Fertigungstoleranzwerten und/oder der zugehörigen Eingreiftoleranzwerten ein Steuersignal bereitgestellt wird.

2. Fertigungssystem nach Anspruch 1, wobei
- mittels des Steuersignals bei einem Überschreiten von einem der entsprechenden Fertigungstoleranzwerte ein Verwerfen des zu fertigenden Objektes gesteuert wird, oder
- mittels des Steuersignals bei einem Überschreiten von einem der entsprechenden Fertigungstoleranzwerte ein Nacharbeiten des zu fertigenden Objektes gesteuert wird oder
- mittels des Steuersignals bei einem Überschreiten von einem der entsprechenden Fertigungstoleranzwerte eine Herstellung eines Ersatzes für das zu fertigende Objekt gesteuert wird.

3. Fertigungssystem nach einem der vorhergehenden Ansprüche, wobei
- mittels des Steuersignals bei einem Überschreiten von einem der entsprechenden Fertigungstoleranzwerte und/oder der entsprechenden Eingreiftoleranzwerten eine Neukalibrierung des Vermessungsgerätes und/oder der Fertigungsmaschine gesteuert wird, und/oder
- mittels des Steuersignals bei einem Überschreiten von einem der entsprechenden Fertigungstoleranzwerte und/oder der entsprechenden Eingreiftoleranzwerten ein erneutes Erfassen und Überprüfen der entsprechenden Messwerte gesteuert wird, und/oder
- mittels des mittels des Steuersignals bei einem Überschreiten von einem der entsprechenden Fertigungstoleranzwerte und/oder der entsprechenden Eingreiftoleranzwerten ein Austauschen eines Werkzeuges gesteuert wird.

4. Fertigungssystem nach einem der vorhergehenden Ansprüche, wobei die Fertigungsanweisungen vorgegebenen Oberflächen des dreidimensionalen Modells zugeordnet sind.

5. Fertigungssystem nach einem der vorhergehenden Ansprüche, wobei
- mittels der Steuerbefehle und/oder der Fertigungsanweisungen eine Auswahl eines oder mehrerer Werkzeuge erfolgt,
- insbesondere für die vorgegebenen Oberflächen des dreidimensionalen Modells voneinander verschiedene Werkzeuge ausgewählt werden.

6. Fertigungssystem nach einem der vorhergehenden Ansprüche, wobei
- mittels der Steuerbefehle und/oder der Fertigungsanweisungen unter Berücksichtigung eines Standortes des Fertigungsmaschine eine Auswahl eines oder mehrerer Werkzeuge durch die Fertigungsmaschine erfolgt,
- insbesondere für die vorgegebenen Oberflächen des dreidimensionalen Modells voneinander verschiedene Werkzeuge ausgewählt werden.

7. Fertigungssystem nach einem der vorhergehenden Ansprüche, insbesondere der Ansprüche 5 oder 6, wobei die Auswahl eines entsprechenden Werkzeuges anhand der zugehörigen Fertigungsreferenzwerte und/oder der Fertigungstoleranzwerte und/oder der Eingreiftoleranzwerte erfolgt.

8. Fertigungssystem nach einem der vorhergehenden Ansprüche, wobei das dreidimensionale Modell von einer Bereitstellungsvorrichtung an das Fertigungssystem und/oder die Fertigungsmaschine und/oder das Messgerät übermittelt wird.

9. Fertigungssystem nach einem der vorhergehenden Ansprüche, wobei die Fertigungsanweisungen notwendige Voraussetzungen für nachfolgende Fertigungsanweisungen umfassen.

10. Fertigungssystem nach einem der vorhergehenden Ansprüche, wobei die Fertigungsanweisungen und das dreidimensionale Modell zu fertigende Strukturen für das zu fertigende Objekt vorgeben.

11. Fertigungssystem nach einem der vorhergehenden Ansprüche, wobei die Auswahl eines entsprechenden Werkzeuges (155) abhängig von den zugehörigen Fertigungsreferenzwerte und/oder den Fertigungstoleranzwerte und/oder den Eingreiftoleranzwerte optimiert wird.

12. Fertigungssystem nach einem der vorhergehenden Ansprüche, **gekennzeichnet durch** eine Vorrichtung aufweisend:
- ein Bereitstellungsmodul zum Bereitstellen des dreidimensionalen Modells, wobei
- das dreidimensionale Modell Fertigungsanweisungen für eine Fertigungsmaschine umfasst,
- mittels des dreidimensionalen Modells und der Fertigungsanweisungen Steuerbefehle durch die Fertigungsmaschine berechnet werden;
- mittels des dreidimensionalen Modells, der Fertigungsanweisungen und der Steuerbefehle die Fertigungsmaschine derart konfiguriert wird, dass ein zu dem dreidimensionalen Modell korrespondierendes Objekt gefertigt wird.

13. Vorrichtung nach einem der vorhergehenden Ansprüche, wobei die Fertigungsanweisungen notwendige Voraussetzungen für nachfolgende Fertigungsanweisungen berücksichtigen.

14. Fertigungsmaschine (100) umfassend
- ein erstes Kommunikationsmodul (110) zum Empfangen eines dreidimensionalen Modells und/oder von Steuerbefehlen, wobei das dreidimensionale Modell Fertigungsanweisungen für die Fertigungsmaschine (100) umfasst;
- ein Fertigungsmodul (130), wobei mittels des dreidimensionalen Modells, der Fertigungsanweisungen und der Steuerbefehle die Fertigungsmaschine (100) derart konfiguriert wird, dass ein zu dem dreidimensionalen Modell korrespondierendes Objekt gefertigt wird,
**dadurch gekennzeichnet, dass**
- den jeweiligen Fertigungsanweisungen Fertigungsreferenzwerte, Fertigungstoleranzwerte und Eingreiftoleranzwerte zugeordnet sind, wobei
- für die Eingreiftoleranzwerte geringere Abweichungen von den Fertigungsreferenzwerten erlaubt sind als bei den Fertigungstoleranzwerten.

15. Vermessungsgerät (200) umfassend:
- ein zweites Kommunikationsmodul (210) zum Empfangen eines dreidimensionalen Modells, wobei
- das dreidimensionale Modell Fertigungsanweisungen umfasst,
- den jeweiligen Fertigungsanweisungen Fertigungsreferenzwerte, Fertigungstoleranzwerte und Eingreiftoleranzwerte zugeordnet sind, und
- für die Eingreiftoleranzwerte geringere Abweichungen von den Fertigungsreferenzwerten erlaubt sind als bei den Fertigungstoleranzwerten;
- ein Erfassungsmodul (220), wobei
- das Erfassungsmodul (220) mittels Sensoren Messwerte für ein gefertigtes Objekt erfasst,
- das Objekt anhand des dreidimensionalen Modells und der Fertigungsanweisungen gefertigt ist,
- die Messwerte jeweils für die Fertigungsreferenzwerte, die Fertigungstoleranzwerte und die Eingreiftoleranzwerte erfasst werden;
- ein Überprüfungsmodul (230), wobei
- bei einer Abweichung der Messwerte von den entsprechenden Fertigungsreferenzwerte und bei einer Überschreitung der zugehörigen Fertigungstoleranzwerten und/oder der zugehörigen Eingreiftoleranzwerten ein Steuersignal bereitgestellt wird;

16. Verfahren zum rechnergestützten Fertigen eines Objektes mittels einer Fertigungsmaschine (100) mit folgenden Verfahrensschritten
- Empfangen eines dreidimensionales Modells und/oder von Steuerbefehlen, wobei das dreidimensionale Modell Fertigungsanweisungen für die Fertigungsmaschine umfasst, wobei den jeweiligen Fertigungsanweisungen Fertigungsreferenzwerte, Fertigungstoleranzwerte und Eingreiftoleranzwerte zugeordnet sind und für die Eingreiftoleranzwerte geringere Abweichungen von den Fertigungsreferenzwerten erlaubt sind als bei den Fertigungstoleranzwerten;
- Fertigen eines zu dem dreidimensionalen Modell korrespondierendes Objektes, wobei mittels des dreidimensionalen Modells, der Fertigungsanweisungen und der Steuerbefehle die Fertigungsmaschine (100) derart konfiguriert wird, dass das Objekt gefertigt wird.

17. Verfahren zum rechnergestützten Überprüfen eines mittels einer Fertigungsmaschine (100) gefertigten Objektes und/oder einer Fertigungsmaschine (100) mit folgenden Verfahrensschritten:
- Empfangen eines dreidimensionalen Modells, wobei
- das dreidimensionale Modell Fertigungsanweisungen umfasst,
- den jeweiligen Fertigungsanweisungen Fertigungsreferenzwerte, Fertigungstoleranzwerte und Eingreiftoleranzwerte zugeordnet sind, und
- für die Eingreiftoleranzwerte geringere Abweichungen von den Fertigungsreferenzwerten erlaubt sind als bei den Fertigungstoleranzwerten;
- Erfassen von Messwerten, wobei
- die Messwerte mittels Sensoren für das gefertigte Objekt erfasst werden,
- das Objekt anhand des dreidimensionalen Modells und der Fertigungsanweisungen gefertigt ist,
- die Messwerte jeweils für die Fertigungsreferenzwerte, die Fertigungstoleranzwerte und die Eingreiftoleranzwerte erfasst werden;
- Überprüfen der Messwerte, wobei
- die Messwerte mit den Referenzwerten abgeglichen werden,
- einer Abweichung der Messwerte von den entsprechenden Fertigungsreferenzwerten und bei einer Überschreitung der zugehörigen Fertigungstoleranzwerten und/oder der zugehörigen Eingreiftoleranzwerten ein Steuersignal bereitgestellt wird.

18. Verfahren zum rechnergestützten Fertigen eines Objektes mittels einer Fertigungsmaschine (100) mit folgenden Verfahrensschritten:
- Empfangen eines dreidimensionalen Modells und/oder von Steuerbefehlen, wobei
- das dreidimensionale Modell Fertigungsanweisungen umfasst,
- den jeweiligen Fertigungsanweisungen Fertigungsreferenzwerte, Fertigungstoleranzwerte und Eingreiftoleranzwerte zugeordnet sind, und
- für die Eingreiftoleranzwerte geringere Abweichungen von den Fertigungsreferenzwerten erlaubt sind als bei den Fertigungstoleranzwerten;
- Fertigen eines zu dem dreidimensionalen Modell korrespondierendes Objektes, wobei mittels des dreidimensionalen Modells, der Fertigungsanweisungen und der Steuerbefehle die Fertigungsmaschine (100) derart konfiguriert wird, dass Objekt gefertigt wird.
- Erfassen von Messwerten, wobei
- die Messwerte mittels Sensoren für das gefertigtes Objekt erfasst werden,
- die Messwerte jeweils für die Fertigungsreferenzwerte, die Fertigungstoleranzwerte und die Eingreiftoleranzwerte erfasst werden;
- Überprüfen der Messwerte, wobei
- einer Abweichung der Messwerte von den entsprechenden Fertigungsreferenzwerten und bei einer Überschreitung der zugehörigen Fertigungstoleranzwerten und/oder der zugehörigen Eingreiftoleranzwerten ein Steuersignal bereitgestellt wird.

19. Computerprogrammprodukt, umfassend Befehle, die bei der Ausführung des Computerprogrammprodukts durch einen Computer diesen veranlassen, das Verfahren nach einem der Ansprüche 16-18 durchzuführen.

20. Computerlesbarer Datenträger, auf dem das Computerprogrammprodukt nach Anspruch 19 gespeichert ist.
